(19) Europäisches Patentamt
European Patent Office
Office européen des brevets

(11) EP 2 829 064 B1

(12) **EUROPEAN PATENT SPECIFICATION**

(45) Date of publication and mention of the grant of the patent:
**27.10.2021 Bulletin 2021/43**

(21) Application number: **13721190.0**

(22) Date of filing: **22.04.2013**

(51) Int Cl.:
***H04N 19/13*** *(2014.01)* ***H04N 19/11*** *(2014.01)*
***H04N 19/14*** *(2014.01)* ***H04N 19/134*** *(2014.01)*
***H04N 19/182*** *(2014.01)* ***H04N 19/176*** *(2014.01)*
***H04N 19/51*** *(2014.01)*

(86) International application number:
**PCT/US2013/037663**

(87) International publication number:
**WO 2013/159119 (24.10.2013 Gazette 2013/43)**

(54) **PARAMETER DETERMINATION FOR EXP-GOLOMB RESIDUALS BINARIZATION FOR LOSSLESS INTRA HEVC CODING**

PARAMETERBESTIMMUNG ZUR BINARISIERUNG VON EXP-GOLOMB-RESTEN ZUR VERLUSTFREIEN INTRA-HEVC-CODIERUNG

DÉTERMINATION DE PARAMÈTRES POUR UNE BINARISATION DE RÉSIDUS EXPONENTIEL-GOLOMB POUR LE CODAGE SANS PERTES INTRA HEVC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2012 US 201261636409 P**
**19.04.2013 US 201313866468**

(43) Date of publication of application:
**28.01.2015 Bulletin 2015/05**

(73) Proprietor: **Huawei Technologies Co., Ltd.**
**Longgang District**
**Shenzhen, Guangdong 518129 (CN)**

(72) Inventors:
- **GAO, Wen**
  **West Windsor, New Jersey 08550 (US)**
- **JIANG, Minqiang**
  **Campbell, California 95008 (US)**
- **YU, Haoping**
  **Carmel, Indiana 46032 (US)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
- **MARCELO J WEINBERGER ET AL: "The LOCO-I Lossless Image Compression Algorithm: Principles and Standardization into JPEG-LS", IEEE TRANSACTIONS ON IMAGE PROCESSING, IEEE SERVICE CENTER, PISCATAWAY, NJ, US, vol. 9, no. 8, 1 August 2000 (2000-08-01), XP011025643, ISSN: 1057-7149, DOI: 10.1109/83.855427**
- **WEINBERGER M J ET AL: "LOCO-I: a low complexity, context-based, lossless image compression algorithm", DATA COMPRESSION CONFERENCE, 1996. DCC '96. PROCEEDINGS SNOWBIRD, UT, USA 31 MARCH-3 APRIL 1996, LOS ALAMITOS, CA, USA,IEEE COMPUT. SOC, US, 31 March 1996 (1996-03-31), pages 140-149, XP010156555, DOI: 10.1109/DCC.1996.488319 ISBN: 978-0-8186-7358-0**
- **GAO W ET AL: "AHG13: Improved Binarization Scheme for Intra Luma Prediction Residuals in Lossless Coding", 9. JCT-VC MEETING; 100. MPEG MEETING; 27-4-2012 - 7-5-2012; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-I0311, 17 April 2012 (2012-04-17), XP030112074,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 829 064 B1

- TEUHOLA J: "A COMPRESSION METHOD FOR CLUSTERED BIT-VECTORS", INFORMATION PROCESSING LETTERS, AMSTERDAM, NL, vol. 7, no. 6, 1 October 1978 (1978-10-01) , pages 308-311, XP001000934, ISSN: 0020-0190, DOI: 10.1016/0020-0190(78)90024-8
- ZHOU (TI) M: "AHG19: Method of frame-based lossless coding mode for HEVC", 99. MPEG MEETING; 6-2-2012 - 10-2-2012; SAN JOSÃ CR ; (MOTION PICTURE EXPERT GROUP OR ISO/IEC JTC1/SC29/WG11),, no. m22955, 4 February 2012 (2012-02-04), XP030051480,
- None

## Description

Not applicable.

## REFERENCE TO A MICROFICHE APPENDIX

Not applicable.

## BACKGROUND

The amount of video data needed to depict even a relatively short film can be substantial, which may result in difficulties when the data is to be streamed or otherwise communicated across a communications network with limited bandwidth capacity. Thus, video data is generally compressed before being communicated across modern day telecommunications networks. The size of a video could also be an issue when the video is stored on a storage device because memory resources may be limited. Video compression devices often use software and/or hardware at the source to code the video data prior to transmission or storage, thereby decreasing the quantity of data needed to represent digital video images. The compressed data is then received at the destination by a video decompression device that decodes the video data. With limited network resources and ever increasing demands of higher video quality, improved compression and decompression techniques that improve compression ratio with little to no sacrifice in image quality are desirable.

For example, video compression may use intra-frame prediction, in which a pixel may be predicted from a reference pixel in the same video frame or slice. When using intra prediction in a lossy mode, transform and quantization operations may occur on a block by block basis, which may limit intra prediction for a given block to the use of reference samples in adjacent blocks for prediction of pixels within the given block. However, Joint Collaborative Team on Video Coding (JCT-VC) within the International Telecommunication Union Telecommunications Standardization Sector (ITU-T), which is responsible for a next generation video coding standard, referred to as High Efficiency Video Coding (HEVC), has considered prediction based on adjacent pixels in a block for lossless coding in intra prediction modes. These prediction techniques may be referred to as pixel-by-pixel, sample-by-sample, or pixel-based intra prediction. However, there are issues with pixel-by-pixel intra prediction for pixels along certain borders of the block being predicted due to the lack of availability of adjacent pixels to be used for the prediction of border pixels along the certain borders.

Further, the entropy encoding for lossless coding for HEVC may have been designed for lossy coding modes. However, the statistics for prediction residuals in lossless coding modes may be much different than the statistics for lossy coding modes. Due to the differing statistics there may be room to improve entropy encoding for lossless coding to take into account the statistics for prediction residuals in lossless coding modes.

Image compression algorithms based on the use of Golomb codes with varying parameters are disclosed in MARCELO J WEINBERGER ET AL: "The LOCO-I Lossless Image Compression Algorithm: Principles and Standardization into JPEG-LS", IEEE TRANSACTIONS ON IMAGE PROCESSING, IEEE SERVICE CENTER, PISCATAWAY, NJ, US, vol. 9, no. 8, 1 August 2000, ISSN: 1057-7149, DOI: 10.1109/83.855427 and in WEINBERGER M J ET AL: "LOCO-I: a low complexity, context-based, lossless image compression algorithm", DATA COMPRESSION CONFERENCE, 1996. DCC '96. PROCEEDINGS SNOWBIRD, UT, USA 31 MARCH-3 APRIL 1996, LOS ALAMITOS, CA, USA,IEEE COMPUT. SOC, US, 31 March 1996, pages 140 - 149, ISBN: 978-0-8186-7358-0, DOI: 10.1109/DCC.1996.488319.

An encoding method for lossless encoding of intra prediction residuals using Exponential-Golomb coding without adaptively updating a value of an Exponential-Golomb parameter according to a value of at least one encoded intra prediction residual value was described by Gao et al. In "AHG13: Improved Binarization Scheme for Intra Luma Prediction Residuals in Lossless Coding", 9. JCT-VC MEETING; 100. MPEG MEETING; 27-4-2012 - 7-5-2012; GENEVA; (JOINT COLLABORATIVE TEAM ON VIDEO CODING OF ISO/IEC JTC1/SC29/WG11 AND ITU-T SG.16), document number JCTVC-I0311.

## SUMMARY

The present invention refers to a video encoding method according to claim 1, a video encoding apparatus according to claim 2 and a video decoding method according to claim 3..

These and other features will be more clearly understood from the following detailed description taken in conjunction with the accompanying drawings and claims.

## BRIEF DESCRIPTION OF THE DRAWINGS

For a more complete understanding of this disclosure, reference is now made to the following brief description, taken in connection with the accompanying drawings and detailed description, wherein like reference numerals represent like parts. The embodiments of the invention are disclosed in figures 13, 14 and 15 and in the corresponding parts of the description. The expression "embodiment" (though not further characterised as "embodiment of the invention") is used also with reference to other teaching included in the application. Said teaching is meant to represent auxiliary information for a better understanding of the invention but does not directly represent the invention.

FIG. 1 is a functional diagram of an embodiment of a video encoder.
FIG. 2A illustrates a horizontal scanning processing order for vertical SAP, and FIG. 2B illustrates a vertical scanning processing order for horizontal SAP.
FIG. 3A illustrates vertical SAP with positive angles, and FIG. 3B illustrates horizontal SAP with positive angles.
FIG. 4 illustrates an embodiment of a 4x4 PU.
FIG. 5 illustrates an embodiment of a sample matrix for a PU.
FIG. 6 illustrates a relationship between samples in a pixel-based prediction scheme.
FIG. 7A illustrates vertical SAP using a positive angle, denoted as a, and FIG. 7B illustrates horizontal SAP using a positive angle.
FIG. 8 is a flowchart of an embodiment of a method for encoding a PU in a lossless mode.
FIG. 9 is a flowchart of an embodiment of a decoding method in a lossless decoding mode.
FIG. 10 illustrates an embodiment of a binarization scheme implemented in a video codec.
FIG. 11 is a histogram of intra prediction residuals in lossless coding.
FIG. 12 is a histogram of quantized and transformed intra prediction residuals.
FIG. 13 illustrates an embodiment of a binarization scheme implemented in a video codec.
FIG. 14 is a flowchart of an embodiment of a method for binarization in a lossless encoding mode.
FIG. 15 is a flowchart of an embodiment of a method for decoding a bitstream.
FIG. 16 is a schematic diagram of an embodiment of a network node.

## DETAILED DESCRIPTION

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein. The scope of the invention is defined by the appended claims.

The color space may be represented by three components including a luminance (luma or Y) component and two chrominance (chroma) components, denoted as Cb and Cr (or sometimes as U and V). A luma or chroma integer value is typically stored and processed in binary form using bits. In the YUV or YCbCr color space, each luma (Y) block corresponds to two chroma blocks including a Cb block and a Cr block. The Cb block and Cr block also correspond to each other.

The chroma blocks and their corresponding luma block are may be located in a same relative position of a video frame, slice, or region. The discussed approach is also applicable to video in any other color space, such as RGB, YCoCg, etc.

In video coding, various sampling rates may be used to code the YCbCr components. The size of a Cb block, its corresponding Cr block, and/or its corresponding Y block may be the same or different depending on a sampling rate. For example, in a 4:2:0 sampling rate, each NxN chroma (Cb or Cr) block may correspond to a 2Nx2N luma block. In this case, a width or height of the chroma block is half that of the corresponding luma block. The chroma components are downsampled or subsampled, since human eyes may be less sensitive to chroma components than to the luma component. For another example, in a 4:4:4 sampling rate, each NxN chroma (Cb or Cr) block may correspond to a NxN luma block. In this case, higher video fidelity may be preserved, but more data may need to be coded. Other sampling rates, such as 4:2:2, 4:2:1, etc., may also be used.

In HEVC, new block concepts have been introduced. For example, a coding unit (CU) may refer to a sub-partitioning of a video frame into square blocks of equal or variable size. In HEVC, a CU may replace a macroblock structure of previous standards. Depending on a mode of inter or intra prediction, a CU may comprise one or more prediction units (PUs), each of which may serve as a basic unit of prediction. For example, for intra prediction, a 64x64 CU may be symmetrically split into four 32x32 PUs. For another example, for an inter prediction, a 64x64 CU may be asymmetrically split into a 16x64 PU and a 48x64 PU.

HEVC is still in the committee draft stage and a main profile has been defined for video sequences with 4:2:0 formats. In the HEVC main profile, a lossless coding mode may be achieved by simply bypassing transform, quantization and in-loop filters (i.e., de-blocking filter, sample adaptive offset (SAO) and adaptive loop filter (ALF)). The design is aimed to provide lossless coding without burdening the HEVC Main Profile encoder and decoder implementation. Further details on lossless as opposed to lossy coding in HEVC are provided below.

FIG. 1 is a functional diagram of an embodiment of a video encoder 100. The encoder 100 may be used in HEVC. A video frame or picture comprising an input block may be fed into the encoder 100. To encode the input block, a prediction block may be generated based on one or more reference blocks, which have been previously coded. The input block may be a luma or chroma CU or PU. The prediction block may be an estimated version of the input block. A residual block may be generated by subtracting the prediction block from the input block (or vice versa) as shown. The residual block may represent a difference between the input block and the prediction block, in other words, prediction residuals or errors. Since an amount of data needed to represent the prediction residuals may typically be less than an amount of data needed to represent the input block, the residual block may be encoded to achieve a higher compression ratio.

There are at least two possible paths in the encoder 100 depending on whether lossy or lossless coding is used. The lossy mode is addressed first. As shown in FIG. 1, in a lossy mode the residual block comprising residual pixels may be fed into a transform module 102. As a result, the residual pixels in a spatial domain may be converted to transform coefficients in a frequency domain by applying a transform matrix. The conversion may be realized through a twodimensional transform, e.g. a transform that closely resembles or is the same as discrete cosine transform (DCT). Further, in a quantization module 104, which follows the transform module 102, a number of high-index transform coefficients may be reduced to zero, which may be skipped in subsequent entropy encoding steps. After quantization, quantized transform coefficients may be entropy encoded by an entropy encoder 150. The entropy encoder 150 may employ any entropy encoding scheme, such as context-adaptive binary arithmetic coding (CABAC) encoding, exponential Golomb encoding, or fixed length encoding, or any combination thereof. After entropy encoding, the encoded block may be transmitted by the encoder 100 as part of a bitstream. The bitstream may be packetized, encapsulated, and transmitted using any available network protocol.

In the encoder 100, the residual block may be converted to the residual block II after going through a series of operations, e.g., including transform, quantization, de-quantization, and inverse transform as shown. Since some or all of these operations may not be fully reversible, information loss may be caused during the conversion process. Thus, the residual block II may be only an approximation of the corresponding residual block, and usually comprises less non-zero residual pixels for higher compression efficiency. Further, the residual block II may be combined with the corresponding prediction block to form a reconstructed block, e.g., by adding the two blocks together. Unless otherwise stated, a corresponding block may indicate a block located at a same relative position of a picture. In this manner, the encoder 100 may implement a lossy coding mode, since the reconstructed block may be a lossy version of the input block.

The reconstructed block may be used as a reference block to generate the prediction block. Depending on the location of the reconstructed block, prediction may be categorized as interframe prediction and intra-frame prediction (in short as inter prediction and intra prediction respectively). In use, successive video frames or slices may be substantially correlated, such that a block in a frame does not substantially vary from a corresponding block in a previously coded frame. Inter prediction may exploit temporal redundancies in a sequence of frames or pictures, e.g. similarities between corresponding blocks of successive frames, to reduce compression data. Inter prediction may be implemented by a motion estimation (ME) module 140 followed by a motion compensation (MC) module 142. In inter prediction, a motion-compensated algorithm may be implemented to calculate a motion vector for a current block in a current frame based on a corresponding block located in one or more reference frames preceding the current frame according to an encoding order.

To improve the quality of a reconstructed video frame (e.g., by reducing blocking artifacts), an in-loop filtering step may be performed before prediction. For example, in inter prediction, a deblocking filter 120 may be applied to pixels located on the edges of the reconstructed block to remove or reduce blocking artifacts. After implementing the deblocking filter 120, sometimes the in-loop filtering step may further comprise a sample adaptive offset (SAO) module 122, which may also be configured to modify values of reconstructed pixels. An adaptive loop filter (ALF) 124 may be applied after the SAO module 122 and the resulting processed blocks may be stored in a frame buffer 126 for use in inter prediction compensation.

Similarly, within a video frame, a pixel may be correlated with other pixels within the same frame such that pixel values within a block or across some blocks may vary only slightly and/or exhibit repetitious textures. To exploit spatial correlations between neighboring blocks in the same frame, intra prediction may be implemented by an intra-prediction estimation (IPE) module 130 followed by intra prediction (IP) module 132 to interpolate the prediction block from one or more previously coded neighboring blocks (including the reconstructed block). The encoder and decoder may interpolate the prediction block independently, thereby enabling a substantial portion of a frame and/or image to be reconstructed from the communication of a relatively few number of reference blocks, e.g., blocks positioned in (and extending from) the upper-left hand corner of the frame. A selection module 134 may select between inter and intra prediction to select the best prediction mode for the input block. Generally, as understood by a person of ordinary skill in the art, the best prediction mode may be determined using rate distortion optimization (RDO) that picks the prediction mode that yields, e.g., a minimum sum of absolute differences between a predicted block and an original block.

Lossless coding is addressed next. In lossless coding modes, the transform 102, quantization 104, inverse quantization 106, and inverse transform 108 modules as well as in-loop filters (deblocking 120, SAO 122, and ALF filters 124) are bypassed as shown in FIG. 1. Transform 102 and quantization 104 modules may use block-based processing, which implies that for lossy coding modes with intra prediction the prediction of pixels within a block is based only on reference pixels in neighboring blocks. Reference pixels within the block may not be available for prediction of pixel values within the block. In contrast, for lossless coding modes with intra prediction the prediction of pixels within a block may be based on other pixels within the block since the transform and quantization modules are bypassed. For this purpose, sample based angular prediction (SAP) may be used for lossless coding.

In SAP, all the samples in a PU may share a same prediction angle as defined in B. Bross, et al. "High Efficiency Video Coding (HEVC) text specification draft 6" JCT-VC Document, JCTVC-H1003, San Jose, CA, Feb. 2012 (hereinafter referred to as "HEVC Draft 6"). Also, the signaling of prediction angles may be the same as that in HEVC Draft 6. A difference may be that the angular prediction is performed sample by sample for a PU in the disclosed method herein to achieve better intra prediction accuracy. That is, the prediction block for the current PU may be generated by performing the SAP sample by sample by using a same prediction angle.

In a SAP method, samples in a PU may be processed in pre-defined orders so that the neighboring samples are available when the current sample in the PU is being predicted from its direct neighbors. FIG. 2A illustrates a horizontal scanning processing order for vertical SAP, and FIG. 2B illustrates a vertical scanning processing order for horizontal SAP. As shown in FIGS. 2A and 2B, the horizontal scanning and vertical scanning processing orders may be applied to the vertical and horizontal angular predictions, respectively. The processing of reference samples around the upper and left PU boundaries of the current PU may be the same as defined in HEVC Draft 6, while reference samples around right and bottom PU boundaries of the current PU are simply padded from the closest boundary samples of the current PU (see padded samples in FIGS. 2A and 2B).

FIG. 3A illustrates vertical SAP with positive angles, and FIG. 3B illustrates horizontal SAP with positive angles. Note that padded samples around right and bottom PU boundaries of the current PU may be required during vertical or horizontal SAP with positive angles, as shown in FIGS. 3A and 3B, respectively. In FIGS. 3A and 3B, x represents the pixel to be predicted, and a and b represent neighboring sample values (actual or predicted).

Consider vertical SAP with positive angles and a 4x4 PU as an example. FIG. 4 illustrates an embodiment of a 4x4 PU with samples (pixel values) denoted as S(i,j) for i=0,1,2,3 and j=0,1,2,3. Pad(i) for i=0,1,2 denotes padded reference samples derived using the closest samples using conventional techniques, meaning the padded reference samples may be expressed as:

$$\mathrm{Pad}(i)=S(i,3)$$

for i=0, 1, 2.

For vertical SAP with a positive prediction angle, the prediction value for S(i,3), i=1,2,3, denoted as P(i,3), is given by the following expression, which is independent of the value of the prediction angle:

$$P(i,3) = S(i-1,3) \text{ for } i=1,2,3. \qquad (1)$$

Thus, in effect the vertical prediction angle for the samples P(i,3), i=1,2,3 may be always 0 degrees, while other samples may use a different prediction angle. Stated another way, the prediction values P(i,3) for i=1,2,3 have a prediction angle of zero. The result is the same for horizontal SAP. Based on these observations, it may be desirable to predict each one of certain boundary samples using its corresponding neighboring samples or pixels, not just the pixel immediately above in vertical SAP or the pixel immediately to the left in horizontal SAP. Disclosed herein are methods and apparatuses for improved prediction of boundary samples in PUs in pixel-based prediction. Instead of using padded samples in prediction of boundary samples that are replicas of adjacent samples and therefore express redundant information, boundary samples may be predicted using neighboring samples. The improved prediction of boundary samples may be combined with SAP of other pixels in a PU to provide an effective pixel-based prediction scheme in lossless coding modes.

Based on the observations above, it may be desirable to predict each one of the boundary samples, e.g., S(i,3), i=1,2,3 for vertical SAP for a 4x4 PU and S(3,i) for i=1,2,3 for horizontal SAP for a 4x4 PU, using its corresponding neighboring pixels, not just the pixel immediately above in vertical SAP or the pixel immediately to the left in horizontal SAP. FIG. 5 illustrates an embodiment of a sample matrix for a PU of size NxN. Consider vertical SAP as an example.

To predict the boundary samples in bold-outlined boxes, i.e., S(i,N-1), i=1,...,N-1, the following adaptive predictor may be used. Let X represent one of the boundary samples, i.e., X=S(i,N-1), 1 ≤ i ≤ (N-1). Let P(x) denote the predicted value of the sample X. Denote X's left, upper, and upper left adjacent neighboring samples as A, B and C, respectively. FIG. 6 illustrates the relationship between samples A, B, C, and X. The sample X may be predicted as follows:

$$P(X)=\begin{cases}\min(A,B) & \text{if } C\geq\max(A,B)\\ \max(A,B) & \text{if } C\leq\min(A,B)\\ A+B-C & \text{else}\end{cases} \quad (2)$$

To illustrate the use of Equation (2) for the horizontal scanning order for vertical SAP, suppose sample S(1,N-1) needs to be predicted (i.e., X=S(1,N-1)). The neighboring samples S(1,N-2), S(0,N-1), and S(0,N-2) have been predicted using the horizontal scanning order of FIG. 2A, thus yielding P(S(1,N-2)), P(S(0,N-1)), and P(S(0,N-2)). Using the notation of Equation (2) and FIG. 6, A=P(S(1,N-2)), B=P(S(0,N-1)), and C=P(S(0,N-2)) in the determination of P(X=S(1,N-1)). To illustrate the use of Equation (2) for the vertical scanning order for horizontal SAP, suppose sample S(N-1,1) needs to be predicted (i.e., X=S(N-1,1)). There is no available neighboring sample below S(N-1,1) for SAP prediction, so Equation (2) is used. The neighboring samples S(N-1,0), S(N-2,0), and S(N-2,1) would have been predicted using the vertical scanning order of FIG. 2B, thus yielding P(S(N-1,0)), P(S(N-2,0), and P(S(N-2,1)). Using the notation of Equation (2) and FIG. 6, A=P(S(N-1,0)), B=P(S(N-2,1)), and C=P(S(N-2,0) in the determination of P(X=S(N-1,1)) using Equation (2). In general, when horizontal SAP is used, the boundary samples using the adaptive predictor in Equation (2) may be S(N-1,i), i=1,...,N-1. To predict one of the above boundary samples, the same predictor as described in Equation (2) may be used. Equation (2) is but one possible way to predict a sample value based on neighboring sample values for certain boundary samples S(i,N-1) or S(N-1,i) for i=1,...,N-1. Other possibilities include computing a median or an average of values A, B, and C.

If a sample is not one of the boundary samples S(i,N-1) (for vertical SAP) or S(N-1,i) (for horizontal SAP) for i=1,2,...,N-1, then any conventional SAP technique may be used. FIG. 7A illustrates vertical SAP using a positive angle, denoted as a, and FIG. 7B illustrates horizontal SAP using a positive angle, also denoted as a. In FIGS. 7A and 7B, X denotes the pixel value to be predicted and A and B represent actual or predicted pixel values for neighboring pixels. In both cases, X may be a weighted (or linear) combination of A and B. For example, X may be expressed as

$$X=(1-s)*A+s*B, \quad (3)$$

where s is a weighting factor in the range [0,1]. The weighting factor should give more weight to A when $\alpha$ is small, and the weight given to B should increase as $\alpha$ increases. The weighting factor *s* may be, for example, equal to $\tan(\alpha)$, where $0 \leq \alpha \leq 45$ degrees. The Intra prediction method specified in HEVC is one of these possible ways to calculate these weighting factors.

FIG. 8 is a flowchart of an embodiment of a method 700 for encoding a PU in a lossless mode. The method begins in block 710. In block 710, a processing order for the PU is determined. The processing order may be a horizontal processing order, e.g., as shown in FIG. 2A, or a vertical processing order, e.g., as shown in FIG. 2B. Next in block 720 the predicted values for border samples in the PU are computed. The border samples to be predicted may be denoted as S(i,N-1) for i=1,2,...,N-1 for a horizontal processing order (i.e., when vertical SAP is used for other samples) and S(N-1,i) for i=1,2,...,N-1 for a vertical processing order (i.e., when horizontal SAP is used for other samples). That is, the particular border samples to be predicted depend on the scanning or processing order. The PU may be arranged as shown in FIG. 5. The predicted values for the border samples may be computed based on the corresponding left, upper, and upper left neighboring samples, e.g. as illustrated in FIG. 6 and using Equation (2). Next in block 730 the predicted values for the remaining samples in the PU (i.e., all samples in the PU other than the aforementioned border samples) are computed using SAP. Any conventional SAP technique may be used, which predicts a sample as a linear combination of two neighboring samples, with the combination depending on a prediction angle. Equation (3) illustrates one example of a SAP technique. The blocks 720 and 730 may be performed in either order or in parallel. In block 740, after the predicted values for all the samples in a PU are determined to provide a prediction PU or prediction block, a residual block may be computed as shown in FIG. 1, which may be a difference between an input block and the computed prediction block. Finally, in block 750 the residual block may be encoded using entropy encoding, e.g., as shown in FIG. 1. Recall that the transform 102 and quantization 104 modules are bypassed in lossless mode, so that the residual block may be provided directly to the entropy encoder 150. The entropy encoded values may be inserted into a bitstream. The PU may comprise luma or chroma samples. The method 700 may be applied to luma samples only, chroma samples only, or both luma samples and chroma samples.

FIG. 9 is a flowchart of an embodiment of a decoding method 760 in a lossless decoding mode. Given the details of the video encoding schemes described herein a person of ordinary skill in the art could formulate a decoding to reverse or "undo" the encoding described herein. However, the method 760 is provided for illustration and convenience. The method 760 starts in block 765 in which a portion of a bitstream is decoded using entropy decoding to generate a residual block. In block 770 a prediction block is reconstructed based on a plurality of reference pixels external to the residual block in one or more previously decoded neighboring blocks. Border samples identified based on the processing order may be reconstructed using corresponding left, upper, and upper left neighboring reconstructed samples. The remaining samples in the prediction block may be reconstructed using SAP (vertical SAP for a horizontal processing order and horizontal SAP for a vertical processing order). In block 775 the prediction block may be added to the residual block to obtain an estimate of an original block (e.g., an input PU) in a video frame. The original block may be luma or chroma samples.

In HEVC Draft 6, when a coding unit employs lossless coding mode, the binarization scheme for intra Luma prediction residuals is the same as that for intra Luma transform coefficient levels. Due to the different statistics between the two sets of data, the binarization scheme can be further improved for Luma prediction residuals without significant changes to the existing scheme.

The encoding process of the transform coefficient levels may comprise two major parts: binarization that converts levels into a sequence of bins, and binary arithmetic entropy coding that compresses bins into bits (collectively implemented as entropy encoding, e.g., using an entropy encoder). FIG. 10 illustrates an embodiment of a binarization scheme 780 implemented in a video codec. Depending on the absolute value of a prediction residual (denoted as X), its binary representation may include one, two, or three parts. A residual block, e.g., as illustrated in FIG. 1, may comprise a plurality of prediction residuals. As discussed previously, a prediction residual may be a difference between an original pixel and a prediction pixel. In an embodiment, if X equals 1 or 2, X may be binarized as one part using a unary code in which 1 is binarized as "0" and 2 is binarized as "10". Such an encoding may be referred to as a truncated unary code (TU) with maximum length of 2. If $X \geq 3$ , the value 3 is first binarized using a binary string "11" and the value (X-3) is further binarized using a truncated Golomb-Rice (TR) code. For a TR code, the maximum value that can be represented is denoted as M. If $(X-3) \leq M$, (M-3) may be represented by a TR. However, if $(X-3) \geq (M+1)$, the value (M+1) is first binarized with an all-one binary string. The rest of the (X-3-(M+1)) is then encoded using an Exponential-Golomb (EG) code with parameter K=0, referred to as an EG0 code. The EG code is one example of a universal code, which maps positive integers to binary codewords as understood by a person of ordinary skill in the art. Other universal codes may be used instead of the EG code.

Note that the above binarization method was originally designed for coding quantized transform coefficients, which typically have small values. However, the input to the binarization operation for luma component in the lossless coding case may be intra prediction residuals without transform and quantization, which exhibit different statistic characteristics from that of intra coded transform coefficients.

Using a SlideEditing test sequence as an example, the histogram of its intra Luma prediction residuals in lossless coding and the histogram of its quantized transform coefficients when coded using QP=27 are shown in FIGS. 11 and 12, respectively. As illustrated by these results, large Luma prediction residuals appear with relatively higher frequency in the lossless case compared to transform coefficients.

If a prediction residual value is large, the value left for the binarization with EG0 code may be also relatively large, resulting in inefficient representation. It may be more efficient to represent a large value using an EG code of higher order, compared to an EG code with a small K parameter. However, the K parameter cannot be too large since it can introduce coding penalty for small values.

Disclosed herein are methods and apparatuses for performing adaptive binarization that take into account statistics of prediction residuals. Adaptive binarization may be better suited for the statistics of prediction residuals of lossless coding schemes than conventional binarization schemes. Adaptive binarization as disclosed herein includes adapting the value of K of the EG code according to average levels of past binarized intra prediction residuals.

FIG. 13 illustrates an embodiment of a binarization scheme 790 implemented in a video codec. As discussed for the scheme 780 in FIG. 12, if $(X-3) \geq (M+1)$, the value (M+1) is first binarized with an all-one binary string. The rest of the (X-3-(M+1)) is then encoded using an EG code with k=0 (i.e., the EG0 code). In contrast, the scheme 790 in FIG. 13 may adapt the parameter K (sometimes referred to herein as the EG parameter) of an EG code if $(X-3) \geq (M+1)$ as described hereafter. EG coding with parameter K is sometimes referred to as EGK. If the condition $(X-3) \geq (M+1)$ is not satisfied, the encoding is the same as for FIG. 12.

FIG. 14 is a flowchart of an embodiment of a method 800 for binarization in a lossless encoding mode. The method 800 begins in block 810, wherein the EG parameter is initialized to a predetermined value, e.g., 0 or 3. Also in block 810 a counter, denoted as N, and an accumulator, denoted as A, (variables used in later parts of method 800) may be set to zero. Next in block 820 a first prediction residual is encoded using EG coding with the selected EG parameter. For example, if the EG parameter is k=3, EG3 coding is used. The method 800 applies for prediction residuals that satisfy $(X-3) \geq (M+1)$, and for these prediction residuals the value (M+1) is binarized with an all-one binary string.

The rest of the value (X-3-(M+1)) may be encoded using an EG code. In block 830 the counter N is updated as the number of prediction residuals coded using EG code with parameter K, including the current one in a coefficient group (typically a block of 16 prediction residuals), where $0 \leq K \leq K_{max}$ and $K_{max}$ is the maximum allowed value. Next in block 840 the accumulator A is updated using the most recent coded values that use parameter K. The accumulator A may be updated as the summation of the coded values from previous encodings in the form of (X-3-(M+1)) if (X-3) ≥ (M+1), including the current one within a coefficient group. In block 850 the value of parameter K is updated. A number of embodiments may be used to update the parameter K, including one of the following six alternative embodiments.

A first embodiment for updating the parameter K is as follows:
for (int i=0; ((N<<i) < A) && (i< $K_{max}$); i++)

$$K=i \quad \text{(Eq. 1)}$$

where the syntax is understood by a person of ordinary skill in the art. That is, (N<<i) denotes shifting a binary representation of the integer N to the left by i bits, i++ denotes incrementing i by one, and "&&" denotes the logical AND operator. Note that the operation to update the K parameter may be minor since it only involves one addition, at most (Kmax+1) increment operations, at most $K_{max}$ left shift operations, and at most $2K_{max}$ comparison operations.

A second embodiment for updating the parameter K is as follows:
for (int i=0; (N<<i)<A; i++)

$$K=\max(i, K_{max}) \quad \text{(Eq. 2)}$$

A third embodiment for updating the parameter K is as follows:
for (int i=0; ((N<<i) < (w*A)) && (i<$K_{max}$); i++)

$$K=i \quad \text{(Eq. 3)}$$

where w is a predefined parameter to adjust the adaptation speed. The method in (Eq. 1) may correspond to the method in (Eq. 3) using w=1. If w>1, the adaptation speed may be faster than the method using w=1. If w < 1, the adaptation speed may be slower than the method using w=1.

A fourth embodiment for updating the parameter K is as follows:
for (int i=0; (N<<i)<(w*A); i++)

$$K=\max(i, Kmax) \quad \text{(Eq. 4)}$$

If we want to fine tune the adaptation rate, a positive coefficient array c[i], i=0,...,$K_{max}$ may be introduced. A fifth embodiment for updating the parameter K is as follows:
for (int i=0; ((c[i]*(N<<i)) <A) && (i<$K_{max}$); i++)

$$K=i \quad \text{(Eq. 5)}$$

Note that c[i]=1 for i=0,...,$K_{max}$ may correspond to the method in (Eq. 1).

A sixth embodiment for updating the parameter K is as follows:
for (int i=0; (c[i]*(N<<i)) <A; i++)

$$K=\max(i, Kmax) \quad \text{(Eq. 6)}$$

The embodiments disclosed in (Eq. 1) to (Eq. 6) may apply only to Luma components. Alternatively, the embodiments disclosed in (Eq. 1) to (Eq. 6) may apply to both Luma and Chroma components. In block 860 a next prediction residual value is encoded using the updated parameter K and the result is inserted into the bitstream. In decision block 870 a decision is made whether there are any prediction residuals remaining to be encoded. If so, the flowchart 800 returns to block 830 and blocks 830-860 are repeated for the next prediction residual. If not, the method 800 ends. Although the method 800 is described in terms of updating the parameter K on a sample-by-sample or value-by-value basis, the parameter K may instead be updated on a block-by-block basis. For any prediction residuals that do not satisfy $(X-3) \geq (M+1)$, the prediction residuals are encoded using the TU and TR codes as described with respect to FIGS. 12 and 13. The adaptation of the parameter K may be performed within a coefficient group, e.g., a 4x4 residual block, in which case N and A are initialized at the beginning of the residual block and the steps 830-860 may be repeated for the pixels in a residual block. The parameter K may be reinitialized at the beginning of each residual block, or alternatively the parameter K may initialized once at the beginning of a frame and the parameter K may be carried over from residual block to residual block (e.g., the parameter K at the beginning of a residual block is the same as the parameter K at the end of the previous residual block).

As understood by a person of ordinary skill in the art, an entropy decoding may use similar operations to those specified in the method 800 to decode a received bitstream. FIG. 15 is a flowchart of an embodiment of a method 1400 for decoding a bitstream generated by the method 800 in FIG. 14. The steps of method 1400 are similar to the steps of method 800, except that blocks 1420 and 1460 involve decoding of received binary strings in a received bitstream to produce prediction residuals instead of encoding prediction residuals to produce binary strings. The schemes described above may be implemented on a network component, such as a computer or network component with sufficient processing power, memory resources, and network throughput capability to handle the necessary workload placed upon it. FIG. 16 is a schematic diagram of an embodiment of a network component or node 1500 suitable for implementing one or more embodiments of the video codecs or methods disclosed herein, such as the encoder 100, the method 700 for encoding a PU, the method 760 for decoding a PU, the method 800 for binarization in a lossless coding mode, and the method 1400 for decoding. The network node 1500 includes a processor 1502 that is in communication with memory devices including secondary storage 1504, read only memory (ROM) 1506, random access memory (RAM) 1508, input/output (I/O) devices 1510, and transmitter/receiver (or transceiver) 1512. The I/O devices 1510 and/or the transmitter/receiver 1512 may be optional and if not included the network node 1500 becomes a computing device in which case an encoded bitstream or a decoded video stream may be stored in memory. The processor 1502 may be implemented as one or more central processing unit (CPU) chips, cores (e.g., a multi-core processor), field-programmable gate arrays (FPGAs), application specific integrated circuits (ASICs), and/or digital signal processors (DSPs). The processor 1502 may be implemented using hardware or a combination of hardware and software.

The secondary storage 1504 typically comprises one or more disk drives or tape drives and is used for non-volatile storage of data and as an over-flow data storage device if RAM 1508 is not large enough to hold all working data. Secondary storage 1504 may be used to store programs that are loaded into RAM 1508 when such programs are selected for execution. The ROM 1506 is used to store instructions and perhaps data that are read during program execution. ROM 1506 is a non-volatile memory device that typically has a small memory capacity relative to the larger memory capacity of secondary storage 1504. The RAM 1508 is used to store volatile data and perhaps to store instructions. Access to both ROM 1506 and RAM 1508 is typically faster than to secondary storage 804.

The transmitter/receiver 1512 may serve as an output and/or input device of the network node 1500. For example, if the transmitter/receiver 1512 is acting as a transmitter, it may transmit data out of the network node 1500. If the transmitter/receiver 1512 is acting as a receiver, it may receive data into the network node 1500. The transmitter/receiver 1512 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards such as code division multiple access (CDMA), global system for mobile communications (GSM), long-term evolution (LTE), worldwide interoperability for microwave access (WiMAX), and/or other air interface protocol radio transceiver cards, and other well-known network devices. The transmitter/receiver 812 may provide an avenue for the processor 1502 to communicate with an Internet or one or more intranets. If the network node 1500 is acting as a video encoder, the processor 1502 may encode a bitstream. The processor 1502 may also packetize and encapsulate (i.e., format) the bitstream for transmission and provide the formatted bitstream to the transmitter/receiver 1512. The transmitter/receiver 1512 would then transmit the formatted bitstream. Likewise, if the network node 1500 is acting as a video decoder, the transmitter/receiver may receive a formatted bitstream. I/O devices 1510 may include a video monitor, liquid crystal display (LCD), touch screen display, or other type of video display for displaying video, and/or may include a video recording device for capturing video. I/O devices 1510 may also include one or more keyboards, mice, or track balls, or other well-known input devices. If the network node 1500 is acting as a video encoder, a video stream to be encoded may be provided by I/O devices 1510 or may be provided in another manner. Similarly, if the network node 1500 is acting as a video decoder, a video stream to be decoded may be received via the transmitter/receiver 1512 or may be provided in another manner.

It is understood that by programming and/or loading executable instructions onto the network node 1500, at least one of the processor 1502, the secondary storage 1504, the RAM 1508, and the ROM 1506 are changed, transforming the network node 1500 in part into a particular machine or apparatus (e.g., a video codec having the functionality taught by the present disclosure). The executable instructions may be stored on the secondary storage 1504, the ROM 1506, and/or the RAM 1508 and loaded into the processor 1502 for execution. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

## Claims

**1.** A video encoding method comprising:

adaptively updating (850) a value of an Exponential-Golomb, EG, parameter K according to a value of at least one encoded intra prediction residual value X if $X-3 \geq M+1$, wherein M is a maximum value that can be represented for a truncated Golomb-Rice TR code; and
encoding (860) an intra prediction residual value X in a lossless mode using an EG code using the value of the EG parameter K;
wherein the EG parameter is adaptively updated by:

incrementing (830) a counter N by a number of at least one intra prediction residual value X that was coded using the value of the EG parameter K; and
updating (840) an accumulator A using a sum of previous coded values of the at least one intra prediction residual value X;
wherein the method further comprises:

initializing (810) the value of the EG parameter K to an initial value; and
encoding (820) a first intra prediction residual value X using EG coding using the initial value, wherein incrementing (830) the counter N and updating (840) the accumulator A account for the encoded first intra prediction residual value X;
wherein the value of the EG parameter K is determined as
for (int i=o; ((N<<i) < A) && (i< $K_{max}$); i++)

$$K=i,$$

where K denotes the value of the EG parameter, N denotes the counter, and A denotes the accumulator and $K_{max}$ is a maximum allowed value of K; or
for (int i=o; (N<<i)<A; i++)

$$K=\max(i, K_{max}),$$

where K denotes the value of the EG parameter, N denotes the counter, A denotes the accumulator, and $K_{max}$ is a maximum allowed value of K; or
for (int i=o; ((N<<i) < (w*A)) && (i<$K_{max}$); i++)

$$K=i$$

where w is a predefined parameter to adjust the adaptation speed, K denotes the value of the EG parameter, N denotes the counter, A denotes the accumulator, and $K_{max}$ is a maximum allowed value of K; or

for (int i=o; (N<<i)<(w*A); i++)

$$K=\max(i, K_{max}),$$

where w is a predefined parameter to adjust the adaptation speed, K denotes the value of the EG parameter, N denotes the counter, A denotes the accumulator, and $K_{max}$ is a maximum allowed value of K; or
for (int i=o; ((c[i]*(N<<i)) <A) && (i<$K_{max}$); i++)

$$K=I,$$

where c[i] is a positive coefficient array for i=o,...,$K_{max}$, K denotes the value of the EG parameter, N denotes the counter, A denotes the accumulator, and $K_{max}$ is a maximum allowed value of K; or
for (int i=o; (c[i]*(N<<i)) <A; i++)

$$K=\max(i, K_{max}),$$

where c[i] is a positive coefficient array for i=o,...,$K_{max}$, K denotes the value of the EG parameter, N denotes the counter, A denotes the accumulator, and $K_{max}$ is the maximum allowed value of K.

**2.** A video encoding apparatus comprising:
a processor configured to:

adaptively update (850) an Exponential-Golomb, EG, parameter K according to a value of at least one encoded intra prediction residual value X if X-3 ≥ M+1, wherein M is a maximum value that can be represented for a truncated Golomb-Rice TR code ; and
encode (860) an intra prediction residual value X in a lossless mode using an EG code with the EG parameter (K);
wherein the EG parameter K is adaptively updated by:

incrementing (830) a counter N by a number of at least one intra prediction residual value X that was coded using the value of the EG parameter K; and
updating (840) an accumulator A using a sum of previous coded values of the at least one intra prediction residual value X;
wherein the processor is further configured to:

initialize (810) the value of the EG parameter K to an initial value; and
encode (820) a first intra prediction residual value X using EG coding using the initial value, wherein incrementing (830) the counter N and updating (840) the accumulator A account for the encoded first intra prediction residual value X;
wherein the value of the EG parameter K is determined as
for (int i=o; ((N<<i) < A) && (i< $K_{max}$); i++)

$$K=i,$$

where K denotes the value of the EG parameter, N denotes the counter, and A denotes the accumulator and $K_{max}$ is a maximum allowed value of K; or
for (int i=o; (N<<i)<A; i++)

$$K=\max(i, K_{max}),$$

where K denotes the value of the EG parameter, N denotes the counter, A denotes the accumulator, and $K_{max}$ is a maximum allowed value of K; or
for (int i=o; ((N<<i) < (w*A)) && (i<$K_{max}$); i++)

$$K=i$$

where w is a predefined parameter to adjust the adaptation speed, K denotes the value of the EG parameter, N denotes the counter, A denotes the accumulator, and $K_{max}$ is a maximum allowed value of K; or
for (int i=o; (N<<i)<(w*A); i++)

$$K=max(i, K_{max}),$$

where w is a predefined parameter to adjust the adaptation speed, K denotes the value of the EG parameter, N denotes the counter, A denotes the accumulator, and $K_{max}$ is a maximum allowed value of K; or
for (int i=o; ((c[i]*(N<<i)) <A) && (i<$K_{max}$); i++)

$$K=I,$$

where c[i] is a positive coefficient array for i=o,...,$K_{max}$, K denotes the value of the EG parameter, N denotes the counter, A denotes the accumulator, and $K_{max}$ is a maximum allowed value of K; or
for (int i=o; (c[i]*(N<<i)) <A; i++)

$$K=max(i, K_{max}),$$

where c[i] is a positive coefficient array for i=o,...,$K_{max}$, K denotes the value of the EG parameter, N denotes the counter, A denotes the accumulator, and $K_{max}$ is a maximum allowed value of K.

**3.** A video decoding method comprising:

adaptively updating (1450) an Exponential-Golomb, EG, parameter K according to a value of at least one binary string in a bitstream if X-3 ≥ M+1, wherein X is at least one encoded intra prediction residual value X and M is a maximum value that can be represented for a truncated Golomb-Rice TR code, wherein the at least one encoded intra prediction residual value X is produced from the at least one binary string in the bitstream; and
decoding (1420) a binary string, representing in a lossless mode, an intra prediction residual value X, using an Exponential-Golomb,EG, code with the EG parameter K;
wherein the EG parameter is adaptively updated by:

incrementing (1430) a counter N by a number of at least one intra prediction residual value X that was decoded using the value of the EG parameter K; and
updating (1440) an accumulator A using a sum of received coded intra prediction residual values X;
wherein the value of the EG parameter K is determined as
for (int i=o; ((N<<i) < A) && (i< $K_{max}$); i++)

$$K=i,$$

where K denotes the value of the EG parameter, N denotes the counter, and A denotes the accumulator and $K_{max}$ is a maximum allowed value of K; or
for (int i=o; (N<<i)<A; i++)

$$K=max(i, K_{max}),$$

where K denotes the value of the EG parameter, N denotes the counter, A denotes the accumulator, and $K_{max}$ is a maximum allowed value of K; or
for (int i=o; ((N<<i) < (w*A)) && (i<$K_{max}$); i++)

$$K=i$$

where w is a predefined parameter to adjust the adaptation speed, K denotes the value of the EG parameter, N denotes the counter, A denotes the accumulator, and $K_{max}$ is a maximum allowed value of K; or
for (int i=o; (N<<i)<(w*A); i++)

$$K=\max(i, K_{max}),$$

where w is a predefined parameter to adjust the adaptation speed, K denotes the value of the EG parameter, N denotes the counter, A denotes the accumulator, and $K_{max}$ is a maximum allowed value of K; or
for (int i=o; ((c[i]*(N<<i)) <A) && (i<$K_{max}$); i++)

$$K=I,$$

where c[i] is a positive coefficient array for i=o,...,$K_{max}$, K denotes the value of the EG parameter, N denotes the counter, A denotes the accumulator, and $K_{max}$ is a maximum allowed value of K; or
for (int i=o; (c[i]*(N<<i)) <A; i++)

$$K=\max(i, K_{max}),$$

where c[i] is a positive coefficient array for i=o,...,$K_{max}$, K denotes the value of the EG parameter, N denotes the counter, A denotes the accumulator, and $K_{max}$ is the maximum allowed value of K.

**Patentansprüche**

**1.** Codierungsverfahren, umfassend:

adaptives Aktualisieren (850) eines Werts eines Exponential-Golomb- bzw. EG-Parameters K gemäß einem Wert mindestens eines codierten Intra-Prädiktions-Restwerts X, wenn $X-3 \geq M+1$ ist, wobei M ein Maximalwert ist, der für einen abgeschnittenen Golomb-Rice-TR-Code repräsentiert werden kann; und
Codieren (860) eines Intra-Prädiktions-Restwerts X in einem verlustlosen Modus unter Verwendung eines EG-Codes unter Verwendung des Werts des EG-Parameters K;
wobei der EG-Parameter adaptiv aktualisiert wird durch:

Inkrementieren (830) eines Zählers N um eine Zahl mindestens eines Intra-Prädiktions-Restwerts X, der unter Verwendung des Werts des EG-Parameters K codiert wurde; und
Aktualisieren (840) eines Akkumulators A unter Verwendung einer Summe vorheriger codierter Werte des mindestens einen Intra-Prädiktions-Restwerts X;
wobei das Verfahren ferner Folgendes umfasst:

Initialisieren (810) des Werts des EG-Parameters K auf einen Initialwert; und
Codieren (820) eines ersten Intra-Prädiktions-Restwerts X unter Verwendung von EG-Codierung unter Verwendung des Initialwerts,
wobei Inkrementieren (830) des Zählers N und Aktualisieren (840) des Akkumulators A Folgendes berücksichtigen:

den codierten ersten Intra-Prädiktions-Restwert X;
wobei der Wert des EG-Parameters K folgendermaßen bestimmt wird:

for(int i=o; ((N<<i) < A) &&(i<$K_{max}$); i++)

$$K=i,$$

wobei K den Wert des EG-Parameters bedeutet, N den Zähler bedeutet und A den Akkumulator bedeutet und $K_{max}$ ein maximal zulässiger Wert von K ist; oder
for(int i=o; (N<<i) < A; i++)

$$K=\max(i, K_{max}),$$

wobei K den Wert des EG-Parameters bedeutet, N den Zähler bedeutet und A den Akkumulator bedeutet und $K_{max}$ ein maximal zulässiger Wert von K ist; oder
for(int i=o; ((N<<i) < (w*A)) &&(i<$K_{max}$); i++)

$$K=i,$$

wobei w ein vordefinierter Parameter zur Justierung der Anpassungsgeschwindigkeit ist, K den Wert des EG-Parameters bedeutet, N den Zähler bedeutet, A den Akkumulator bedeutet und $K_{max}$ ein maximal zulässiger Wert von K ist; oder
for(int i=o; (N<<i) < (w*A; i++)

$$K=\max(i, K_{max}),$$

wobei w ein vordefinierter Parameter zur Justierung der Anpassungsgeschwindigkeit ist, K den Wert des EG-Parameters bedeutet, N den Zähler bedeutet, A den Akkumulator bedeutet und $K_{max}$ ein maximal zulässiger Wert von K ist; oder
for(int i=o; ((c[i]*(N<<i) < A) &&(i<$K_{max}$); i++)

$$K=i,$$

wobei c[i] ein Positiv-Koeffizientenarray für i=o,...,$K_{max}$ ist, K den Wert des EG-Parameters bedeutet, N den Zähler bedeutet, A den Akkumulator bedeutet und $K_{max}$ ein maximal zulässiger Wert von K ist; oder
for(int i=o; (c[i]*(N<<i)) < A; i++)

$$K=\max(i, K_{max}),$$

wobei c[i] ein Positiv-Koeffizientenarray für i=o,...,$K_{max}$ ist, K den Wert des EG-Parameters bedeutet, N den Zähler bedeutet, A den Akkumulator bedeutet und $K_{max}$ ein maximal zulässiger Wert von K ist.

**2.** Videocodierungsvorrichtung, umfassend:
einen Prozessor, der für Folgendes ausgelegt ist:

adaptives Aktualisieren (850) eines Werts eines Exponential-Golomb- bzw. EG-Parameters K gemäß einem Wert mindestens eines codierten Intra-Prädiktions-Restwerts X, wenn $X-3 \geq M+1$ ist, wobei M ein Maximalwert ist, der für einen abgeschnittenen Golomb-Rice-TR-Code repräsentiert werden kann; und
Codieren (860) eines Intra-Prädiktions-Restwerts X in einem verlustlosen Modus unter Verwendung eines EG-Codes unter Verwendung des Werts des EG-Parameters K;
wobei der EG-Parameter adaptiv aktualisiert wird durch:

Inkrementieren (830) eines Zählers N um eine Zahl mindestens eines Intra-Prädiktions-Restwerts X, der unter Verwendung des Werts des EG-Parameters K codiert wurde; und
Aktualisieren (840) eines Akkumulators A unter Verwendung einer Summe vorheriger codierter Werte des mindestens einen Intra-Prädiktions-Restwerts X;
wobei der Prozessor ferner zu Folgendem ausgelegt ist:

Initialisieren (810) des Werts des EG-Parameters K auf einen Initialwert; und
Codieren (820) eines ersten Intra-Prädiktions-Restwerts X unter Verwendung von EG-Codierung unter Verwendung des Initialwerts,
wobei Inkrementieren (830) des Zählers N und Aktualisieren (840) des Akkumulators A Folgendes berücksichtigen:

den codierten ersten Intra-Prädiktions-Restwert X;
wobei der Wert des EG-Parameters K folgendermaßen bestimmt wird:

for(int i=o; ((N<<i) < A) &&(i<$K_{max}$); i++)

$$K=i,$$

wobei K den Wert des EG-Parameters bedeutet, N den Zähler bedeutet und A den Akkumulator bedeutet und $K_{max}$ ein maximal zulässiger Wert von K ist; oder
for(int i=o; (N<<i) < A; i++)

$$K=max(i, K_{max}),$$

wobei K den Wert des EG-Parameters bedeutet, N den Zähler bedeutet und A den Akkumulator bedeutet und $K_{max}$ ein maximal zulässiger Wert von K ist; oder
for(int i=o; ((N<<i) < (w*A)) &&(i<$K_{max}$); i++)

$$K=i,$$

wobei w ein vordefinierter Parameter zur Justierung der Anpassungsgeschwindigkeit ist, K den Wert des EG-Parameters bedeutet, N den Zähler bedeutet, A den Akkumulator bedeutet und $K_{max}$ ein maximal zulässiger Wert von K ist; oder
for(int i=o; (N<<i) < (w*A; i++)

$$K=max(i, K_{max}),$$

wobei w ein vordefinierter Parameter zur Justierung der Anpassungsgeschwindigkeit ist, K den Wert des EG-Parameters bedeutet, N den Zähler bedeutet, A den Akkumulator bedeutet und $K_{max}$ ein maximal zulässiger Wert von K ist; oder
for(int i=o; ((c[i]*(N<<i) < A) &&(i<$K_{max}$); i++)

$$K=i,$$

wobei c[i] ein Positiv-Koeffizientenarray für i=o,...,$K_{max}$ ist, K den Wert des EG-Parameters bedeutet, N den Zähler bedeutet, A den Akkumulator bedeutet und $K_{max}$ ein maximal zulässiger Wert von K ist; oder
for(int i=o; (c[i]*(N<<i) < A; i++)

$$K=max(i, K_{max}),$$

wobei c[i] ein Positiv-Koeffizientenarray für i=o,...,$K_{max}$ ist, K den Wert des EG-Parameters bedeutet, N den Zähler bedeutet, A den Akkumulator bedeutet und $K_{max}$ ein maximal zulässiger Wert von K ist.

**3.** Videodecodierungsverfahren, umfassend:

adaptives Aktualisieren (1450) eines Exponential-Golomb- bzw. EG-Parameters K gemäß einem Wert mindestens einer Binärkette in einem Bitstrom, wenn $X-3 \geq M+1$ ist, wobei X mindestens ein codierter Intra-Prädiktions-Restwert X ist und M ein Maximalwert ist, der für einen abgeschnittenen Golomb-Rice-TR-Code repräsentiert werden kann, wobei der mindestens eine codierte Intra-Prädiktions-Restwert X aus der mindestens einen Binärkette in dem Bitstrom produziert wird; und
Decodieren (1420) einer Binärkette, die in einem verlustlosen Modus einen Intra-Prädiktions-Restwert X repräsentiert, unter Verwendung eines Exponential-Golomb- bzw. EG-Codes mit dem EG-Parameter K;
wobei der EG-Parameter adaptiv aktualisiert wird durch:

Inkrementieren (1430) eines Zählers N um eine Zahl mindestens eines Intra-Prädiktions-Restwerts X, der unter Verwendung des Werts des EG-Parameters K decodiert wurde; und
Aktualisieren (1440) eines Akkumulators A unter Verwendung einer Summe erhaltener codierter Intra-Prädiktions-Restwerte X;
wobei der Wert des EG-Parameters K folgendermaßen bestimmt wird:

for(int i=o; ((N<<i) < A) &&(i<$K_{max}$); i++)

$$K=i,$$

wobei K den Wert des EG-Parameters bedeutet, N den Zähler bedeutet und A den Akkumulator bedeutet und $K_{max}$ ein maximal zulässiger Wert von K ist; oder
for(int i=o; (N<<i) < A; i++)

$$K=max(i, K_{max}),$$

wobei K den Wert des EG-Parameters bedeutet, N den Zähler bedeutet und A den Akkumulator bedeutet und $K_{max}$ ein maximal zulässiger Wert von K ist; oder
for(int i=o; ((N<<i) < (w*A)) &&(i<$K_{max}$); i++)

$$K=i,$$

wobei w ein vordefinierter Parameter zur Justierung der Anpassungsgeschwindigkeit ist, K den Wert des EG-Parameters bedeutet, N den Zähler bedeutet, A den Akkumulator bedeutet und $K_{max}$ ein maximal zulässiger Wert von K ist; oder
for(int i=o; (N<<i) < (w*A; i++)

$$K=max(i, K_{max}),$$

wobei w ein vordefinierter Parameter zur Justierung der Anpassungsgeschwindigkeit ist, K den Wert des EG-Parameters bedeutet, N den Zähler bedeutet, A den Akkumulator bedeutet und $K_{max}$ ein maximal zulässiger Wert von K ist; oder
for(int i=o; ((c[i]*(N<<i) < A) &&(i<$K_{max}$); i++)

$$K=i,$$

wobei c[i] ein Positiv-Koeffizientenarray für i=o,...,$K_{max}$ ist, K den Wert des EG-Parameters bedeutet, N den Zähler bedeutet, A den Akkumulator bedeutet und $K_{max}$ ein maximal zulässiger Wert von K ist; oder
for(int i=o; (c[i]*(N<<i) < A; i++)

$$K=max(i, K_{max}),$$

wobei c[i] ein Positiv-Koeffizientenarray für i=o,...,$K_{max}$ ist, K den Wert des EG-Parameters bedeutet, N den Zähler bedeutet, A den Akkumulator bedeutet und $K_{max}$ ein maximal zulässiger Wert von K ist.

## Revendications

1. Procédé de codage vidéo comprenant :

la mise à jour de manière adaptative (850) d'une valeur d'un paramètre K exponentiel — Golomb, EG, en fonction d'une valeur d'au moins une valeur X résiduelle intra prédiction codée si X — 3 ≥ M + 1, où M est une valeur maximale qui peut être représentée pour un code tronqué Golomb - Rice, TR, et
le codage (860) d'une valeur X résiduelle intra prédiction dans un mode sans perte en utilisant un code EG utilisant la valeur du paramètre K EG,
dans lequel le paramètre EG est mis à jour de manière adaptative par :

l'incrémentation (830) d'un compteur N d'un nombre d'au moins une valeur X résiduelle intra prédiction qui a été codée en utilisant la valeur du paramètre K EG, et la mise à jour (840) d'un accumulateur A en utilisant une somme de valeurs codées précédentes de la ou des valeurs X résiduelles intra prédiction,
le procédé comprenant en outre :

l'initialisation (810) de la valeur du paramètre K EG à une valeur initiale, et
le codage (820) d'une première valeur X résiduelle intra prédiction en utilisant un codage EG en utilisant la valeur initiale,
dans lequel l'incrémentation (830) du compteur N et la mise à jour (840) de l'accumulateur A comptent pour la première valeur X résiduelle intra prédiction codée,
dans lequel la valeur du paramètre K EG est déterminée comme étant :

pour (int i = o ; ((N << i) < A) && (i < $K_{max}$) ; i++)

$$K = i,$$

où K représente la valeur du paramètre EG, N représente le compteur et A représente l'accumulateur, et $K_{max}$ est une valeur maximale autorisée de K, ou
pour (int i = o ; (N << i) < A ; i++)

$$K = \max(i, K_{max}),$$

où K représente la valeur du paramètre EG, N représente le compteur et A représente l'accumulateur, et $K_{max}$ est une valeur maximale autorisée de K, ou
pour (int i = o ; ((N << i) < (w * A)) && (i < $K_{max}$) ; i++)

$$K = i$$

où w est un paramètre prédéfini pour ajuster la vitesse d'adaptation, K représente la valeur du paramètre EG, N représente le compteur, A représente l'accumulateur, et où $K_{max}$ est une valeur maximale autorisée de K, ou
pour (int i = o ; (N << i) < (w * A) ; i++)

$$K = \max(i, K_{max}),$$

où w est un paramètre prédéfini pour ajuster la vitesse d'adaptation, K représente la valeur du paramètre EG, N représente le compteur, A représente l'accumulateur, et
$K_{max}$ est une valeur maximale autorisée de K, ou
pour (int i = o ; ((c[i] * (N << i)) < A) && (i < $K_{max}$) ; i++)

$$K = I,$$

où c[i] est une matrice à coefficients positifs pour i = 0, ..., $K_{max}$, K représente la valeur du paramètre EG, N représente le compteur, A représente l'accumulateur, et $K_{max}$ est une valeur maximale autorisée de K, ou
pour (int i = o ; (c[i] * (N << i)) < A ; i++)

$$K = \max(i, K_{max}),$$

où c[i] est une matrice à coefficients positifs pour i = 0, ..., $K_{max}$, K représente la valeur du paramètre EG, N représente le compteur, A représente l'accumulateur, et $K_{max}$ est la valeur maximale autorisée de K.

**2.** Appareil de codage vidéo comprenant :
un processeur configuré pour :

mettre à jour de manière adaptative (850) un paramètre K exponentiel — Golomb, EG,
en fonction d'une valeur d'au moins une valeur X résiduelle intra prédiction codée si X — 3 ≥ M + 1, où M est une valeur maximale qui peut être représentée pour un code tronqué Golomb - Rice, TR, et
coder (860) une valeur X résiduelle intra prédiction dans un mode sans perte en utilisant un code EG avec le paramètre K EG,
dans lequel le paramètre EG est mis à jour de manière adaptative par :

l'incrémentation (830) d'un compteur N d'un nombre d'au moins une valeur X résiduelle intra prédiction qui a été codée en utilisant la valeur du paramètre K EG, et
la mise à jour (840) d'un accumulateur A en utilisant une somme de valeurs codées précédentes de la ou des valeurs X résiduelles intra prédiction,
dans lequel le processeur est en outre configuré pour :

initialiser (810) la valeur du paramètre K EG à une valeur initiale, et
coder (820) une première valeur X résiduelle intra prédiction en utilisant un codage EG utilisant la valeur initiale,
dans lequel l'incrémentation (830) du compteur N et la mise à jour (840) de l'accumulateur A comptent pour la première valeur X résiduelle intra prédiction codée,
dans lequel la valeur du paramètre K EG est déterminée comme étant :

pour (int i = o ; ((N << i) < A) && (i < $K_{max}$) ; i++)

$$K = i,$$

où K représente la valeur du paramètre EG, N représente le compteur et A représente l'accumulateur, et $K_{max}$ est une valeur maximale autorisée de K, ou
pour (int i = o ; (N << i) < A ; i++)

$$K = \max(i, K_{max}),$$

où K représente la valeur du paramètre EG, N représente le compteur, A représente l'accumulateur, et $K_{max}$ est une valeur maximale autorisée de K, ou
pour (int i = o ; ((N << i) < (w * A)) && (i < $K_{max}$) ; i++)

$$K = i$$

où w est un paramètre prédéfini pour ajuster la vitesse d'adaptation, K représente la valeur du paramètre EG, N représente le compteur, A représente l'accumulateur, et $K_{max}$ est une valeur maximale autorisée de K, ou
pour (int i = o ; (N << i) < (w * A) ; i++)

$$K = \max(i, K_{max}),$$

où w est un paramètre prédéfini pour ajuster la vitesse d'adaptation, K représente la valeur du paramètre EG, N représente le compteur, A représente l'accumulateur, et $K_{max}$ est une valeur maximale autorisée de K, ou
pour (int i = o ; ((c[i] * (N << i)) < A) && (i < $K_{max}$) ; i++)

$$K = I,$$

où c[i] est une matrice à coefficients positifs pour i = 0, ..., $K_{max}$, K représente la valeur du paramètre EG, N représente le compteur, A représente l'accumulateur, et $K_{max}$ est une valeur maximale autorisée de K, ou
pour (int i = o ; (c[i] * (N << i)) < A ; i++)

$$K = \max(i, K_{max}),$$

où c[i] est une matrice à coefficients positifs pour i = 0, ..., $K_{max}$, K représente la valeur du paramètre EG, N représente le compteur, A représente l'accumulateur, et $K_{max}$ est la valeur maximale autorisée de K.

**3.** Procédé de décodage vidéo comprenant :

la mise à jour de manière adaptative (1450) d'un paramètre K exponentiel — Golomb, EG, en fonction d'une valeur d'au moins une chaîne binaire dans un flux binaire si $X - 3 \geq M + 1$, où X est au moins une valeur X résiduelle intra prédiction codée et M est une valeur maximale qui peut être représentée pour un code tronqué Golomb - Rice, TR, où la ou les valeurs X résiduelles intra prédiction codées sont générées à partir de la ou des chaînes binaires dans le flux binaire, et
le décodage (1420) d'une chaîne binaire représentant dans un mode sans perte une valeur X résiduelle intra prédiction en utilisant un code exponentiel — Golomb, EG avec le paramètre K EG,
dans lequel le paramètre EG est mis à jour de manière adaptative par :

l'incrémentation (1430) d'un compteur N d'un nombre d'au moins une valeur X résiduelle intra prédiction qui a été décodée en utilisant la valeur du paramètre K EG, et
la mise à jour (1440) d'un accumulateur A en utilisant une somme de valeurs X résiduelles intra prédiction codées reçues,
dans lequel la valeur du paramètre K EG est déterminée comme étant :

pour (int i = o ; ((N << i) < A) && (i < $K_{max}$) ; i++)

$$K = i,$$

où K représente la valeur du paramètre EG, N représente le compteur et A représente l'accumulateur, et $K_{max}$ est une valeur maximale autorisée de K, ou
pour (int i = o ; (N << i) < A ; i++)

$$K = \max(i, K_{max}),$$

où K représente la valeur du paramètre EG, N représente le compteur, A représente l'accumulateur, et $K_{max}$ est une valeur maximale autorisée de K, ou

pour (int i = o ; ((N << i) < (w * A)) && (i < $K_{max}$) ; i++)

$$K = i$$

où w est un paramètre prédéfini pour ajuster la vitesse d'adaptation, K représente la valeur du paramètre EG, N représente le compteur, A représente l'accumulateur, et $K_{max}$ est une valeur maximale autorisée de K, ou
pour (int i = o ; (N << i) < (w * A) ; i++)

$$K = \max (i, K_{max}),$$

où w est un paramètre prédéfini pour ajuster la vitesse d'adaptation, K représente la valeur du paramètre EG, N représente le compteur, A représente l'accumulateur, et $K_{max}$ est une valeur maximale autorisée de K, ou
pour (int i = o ; ((c[i] * (N << i)) < A) && (i < $K_{max}$) ; i++)

$$K = I,$$

où c[i] est une matrice à coefficients positifs pour i = 0, ..., $K_{max}$, K représente la valeur du paramètre EG, N représente le compteur, A représente l'accumulateur, et $K_{max}$ est une valeur maximale autorisée de K, ou
pour (int i = o ; (c[i] * (N << i)) < A ; i++)

$$K = \max (i, K_{max}),$$

où c[i] est une matrice à coefficients positifs pour i = 0, ..., $K_{max}$, K représente la valeur du paramètre EG, N représente le compteur, A représente l'accumulateur, et $K_{max}$ est la valeur maximale autorisée de K.

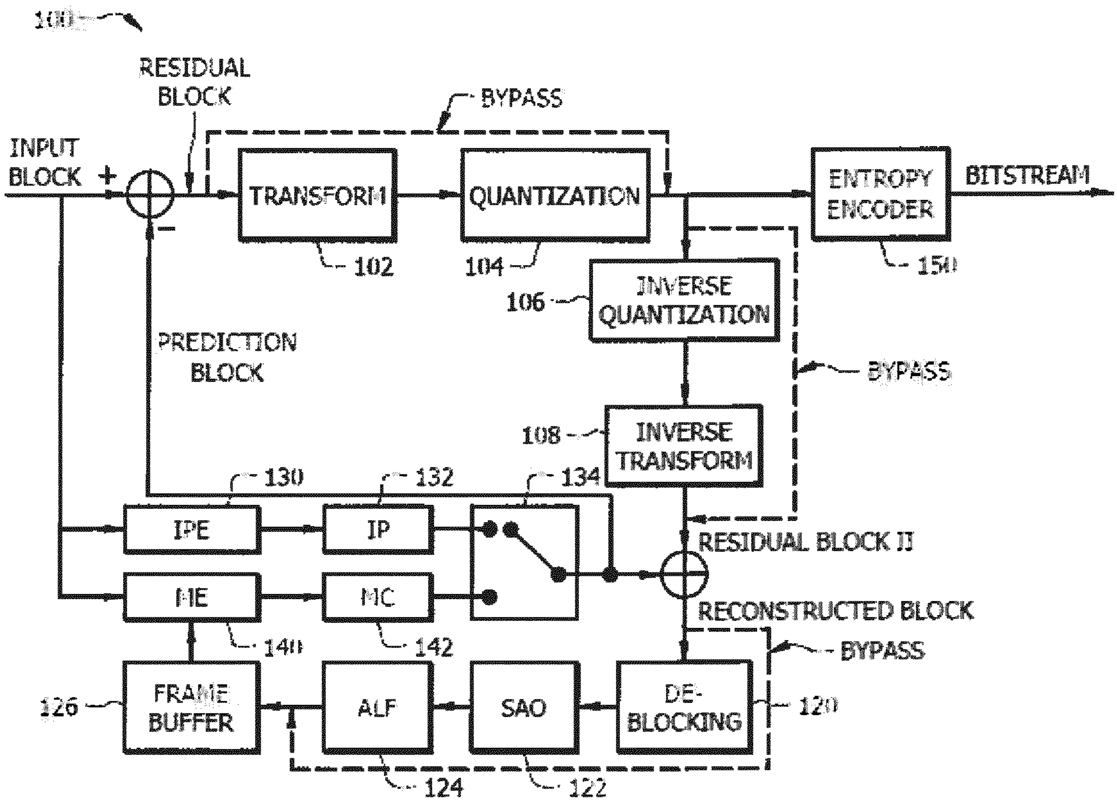
100
RESIDUAL BLOCK
BYPASS
INPUT BLOCK
+
−
TRANSFORM
QUANTIZATION
ENTROPY ENCODER
BITSTREAM
102
104
150
106
INVERSE QUANTIZATION
PREDICTION BLOCK
BYPASS
108
INVERSE TRANSFORM
130
132
134
IPE
IP
RESIDUAL BLOCK II
ME
MC
RECONSTRUCTED BLOCK
140
142
BYPASS
126
FRAME BUFFER
ALF
SAO
DE-BLOCKING
120
124
122

FIG. 1

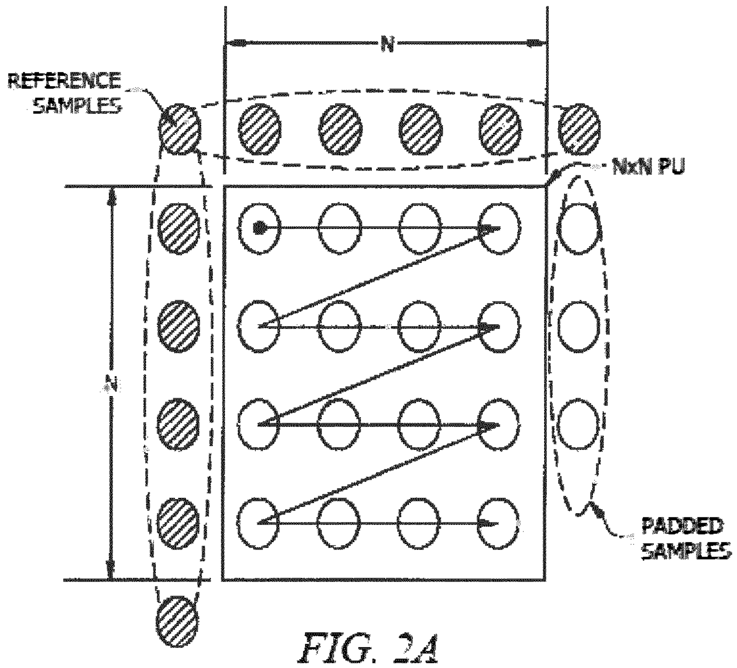
N
REFERENCE SAMPLES
NxN PU
N
PADDED SAMPLES

FIG. 2A

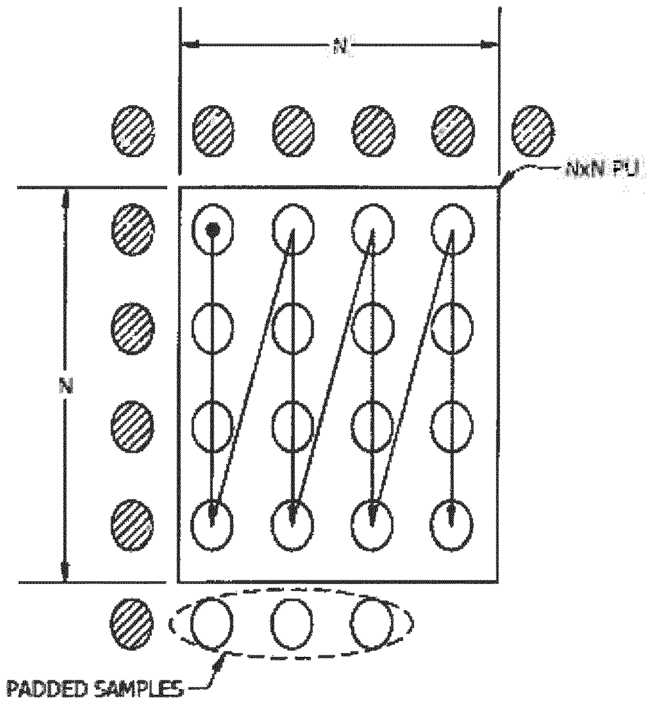
N
NxN PU
N
PADDED SAMPLES

FIG. 2B

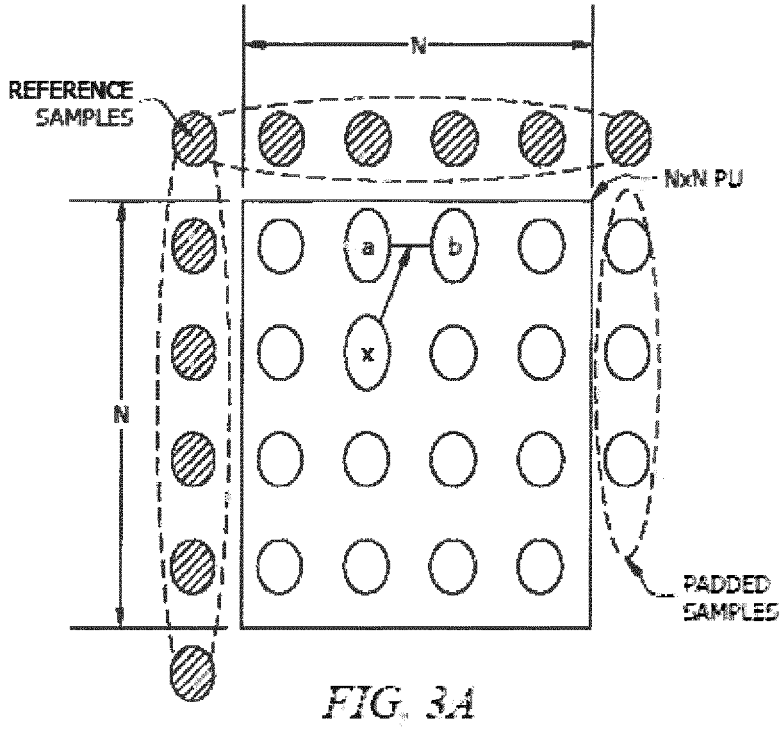
N
REFERENCE SAMPLES
NxN PU
a
b
x
N
PADDED SAMPLES

FIG. 3A

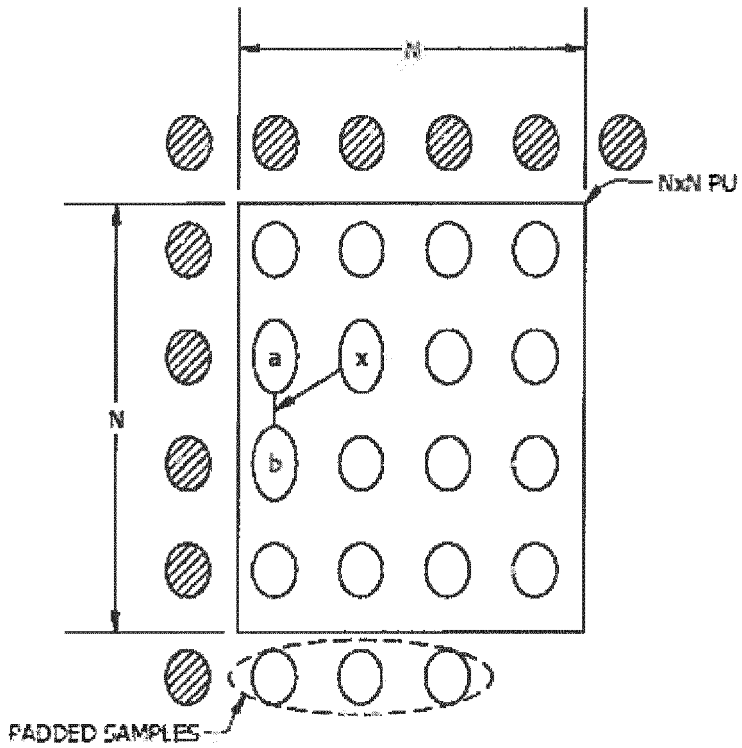
N
NxN PU
a
x
b
N
PADDED SAMPLES

FIG. 3B

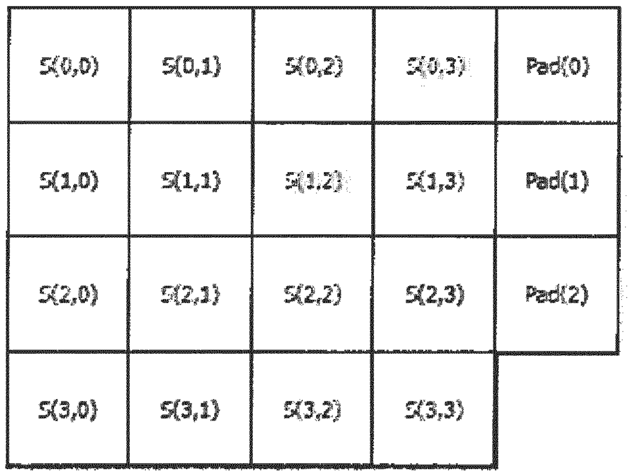
S(0,0)
S(0,1)
S(0,2)
S(0,3)
Pad(0)
S(1,0)
S(1,1)
S(1,2)
S(1,3)
Pad(1)
S(2,0)
S(2,1)
S(2,2)
S(2,3)
Pad(2)
S(3,0)
S(3,1)
S(3,2)
S(3,3)

*FIG. 4*

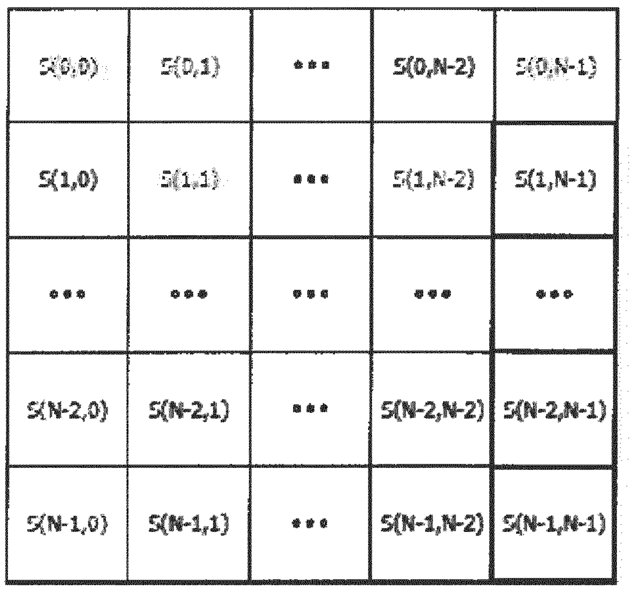
S(0,0)
S(0,1)
•••
S(0,N-2)
S(0,N-1)
S(1,0)
S(1,1)
•••
S(1,N-2)
S(1,N-1)
•••
•••
•••
•••
•••
S(N-2,0)
S(N-2,1)
•••
S(N-2,N-2)
S(N-2,N-1)
S(N-1,0)
S(N-1,1)
•••
S(N-1,N-2)
S(N-1,N-1)

*FIG. 5*

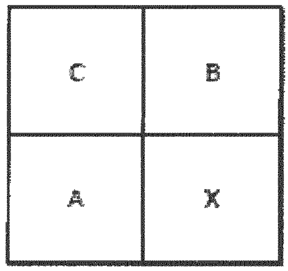


FIG. 6

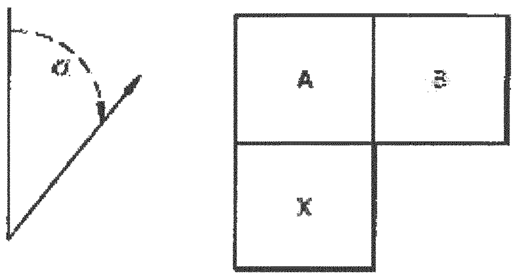


FIG. 7A

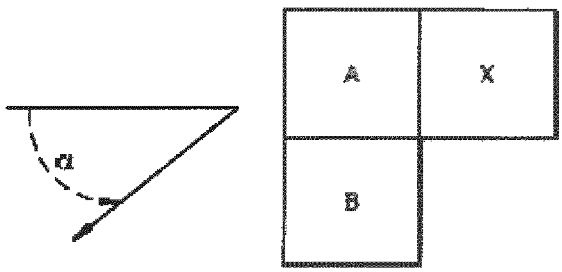


FIG. 7B

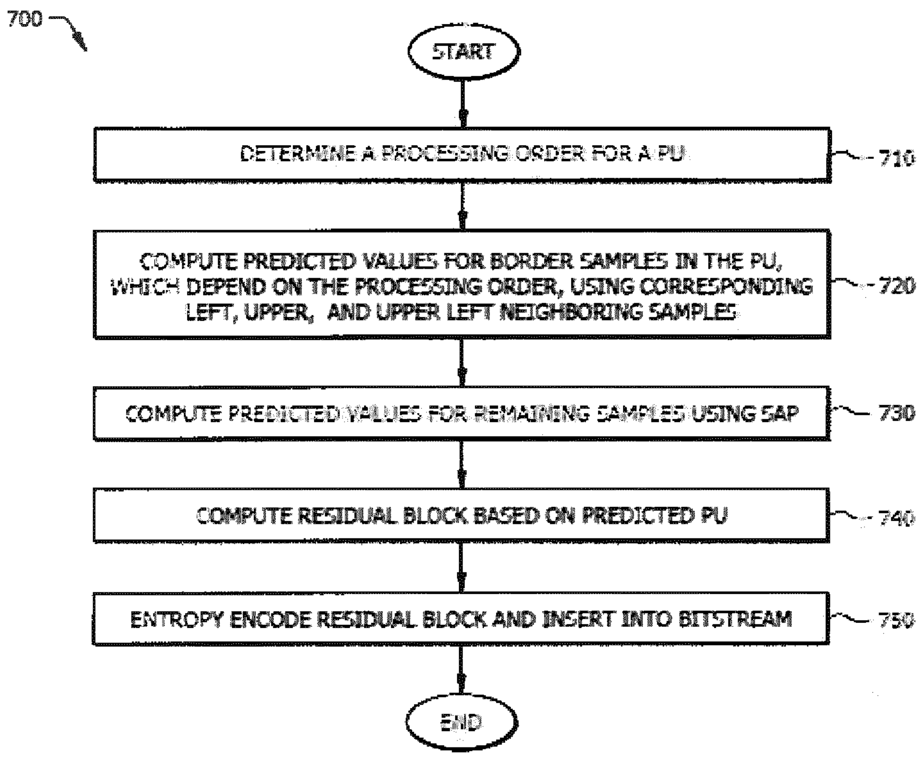
700
START
DETERMINE A PROCESSING ORDER FOR A PU
710
COMPUTE PREDICTED VALUES FOR BORDER SAMPLES IN THE PU, WHICH DEPEND ON THE PROCESSING ORDER, USING CORRESPONDING LEFT, UPPER, AND UPPER LEFT NEIGHBORING SAMPLES
720
COMPUTE PREDICTED VALUES FOR REMAINING SAMPLES USING SAP
730
COMPUTE RESIDUAL BLOCK BASED ON PREDICTED PU
740
ENTROPY ENCODE RESIDUAL BLOCK AND INSERT INTO BITSTREAM
750
END

*FIG. 8*

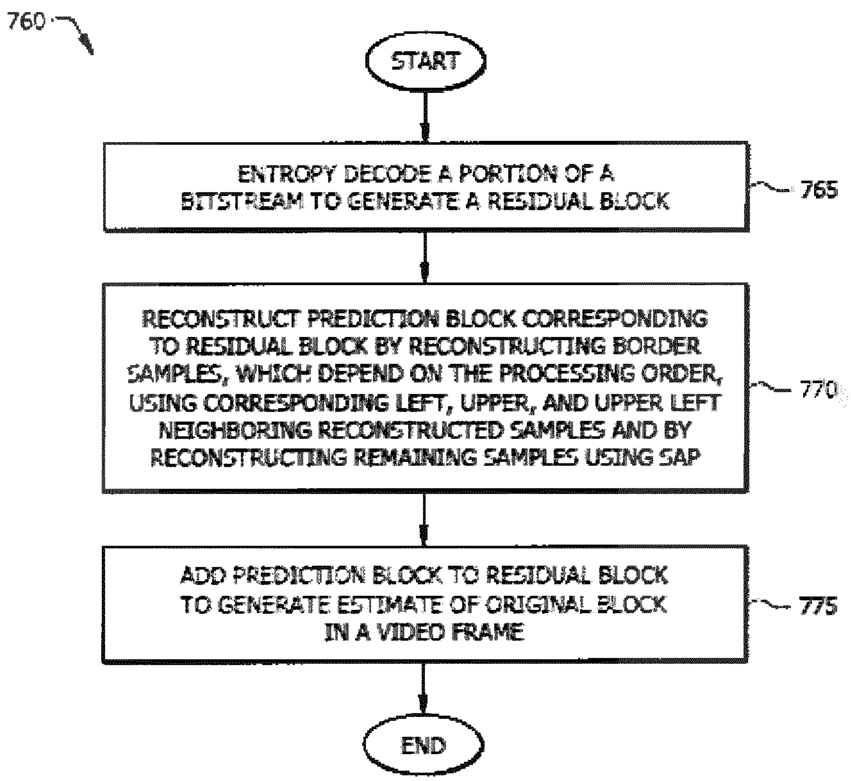
760
START
ENTROPY DECODE A PORTION OF A BITSTREAM TO GENERATE A RESIDUAL BLOCK
765
RECONSTRUCT PREDICTION BLOCK CORRESPONDING TO RESIDUAL BLOCK BY RECONSTRUCTING BORDER SAMPLES, WHICH DEPEND ON THE PROCESSING ORDER, USING CORRESPONDING LEFT, UPPER, AND UPPER LEFT NEIGHBORING RECONSTRUCTED SAMPLES AND BY RECONSTRUCTING REMAINING SAMPLES USING SAP
770
ADD PREDICTION BLOCK TO RESIDUAL BLOCK TO GENERATE ESTIMATE OF ORIGINAL BLOCK IN A VIDEO FRAME
775
END

FIG. 9

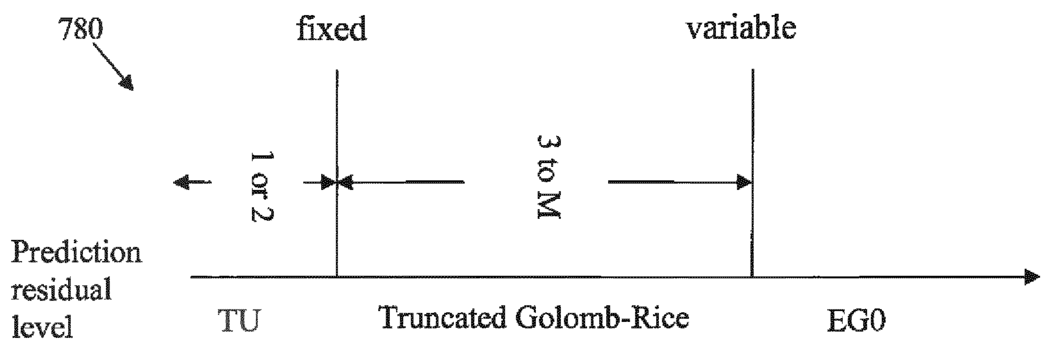
780
fixed
variable
1 or 2
3 to M
Prediction residual level
TU
Truncated Golomb-Rice
EG0

*FIG. 10*

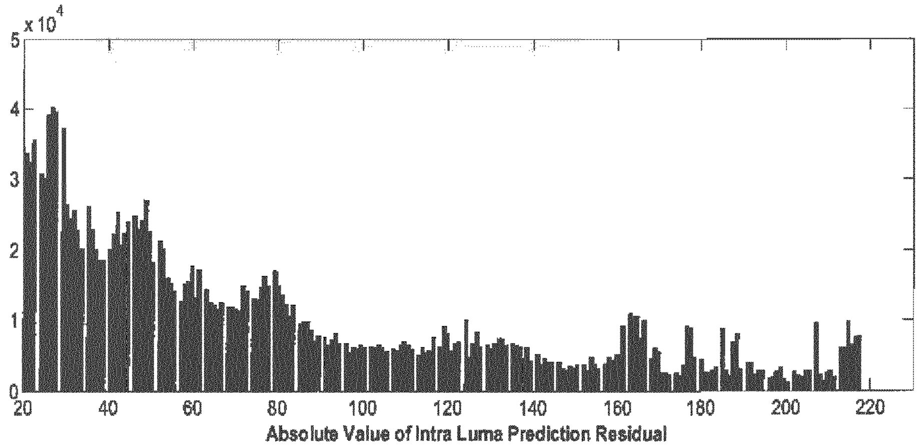
x 10^4
5
4
3
2
1
0
20
40
60
80
100
120
140
160
180
200
220
Absolute Value of Intra Luma Prediction Residual

*FIG. 11*

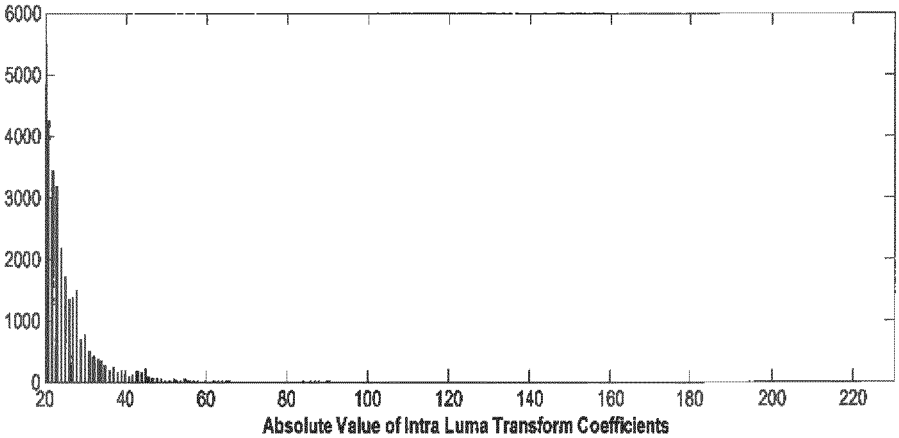
6000
5000
4000
3000
2000
1000
0
20
40
60
80
100
120
140
160
180
200
220
Absolute Value of Intra Luma Transform Coefficients

*FIG. 12*

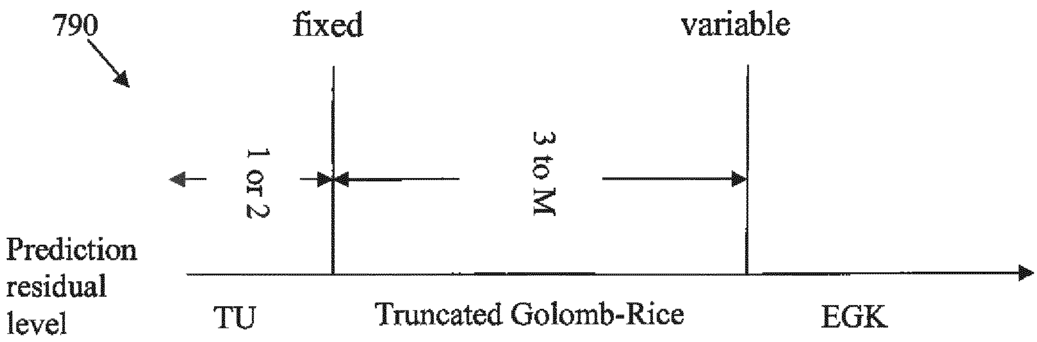
790
fixed
variable
1 or 2
3 to M
Prediction residual level
TU
Truncated Golomb-Rice
EGK

*FIG. 13*

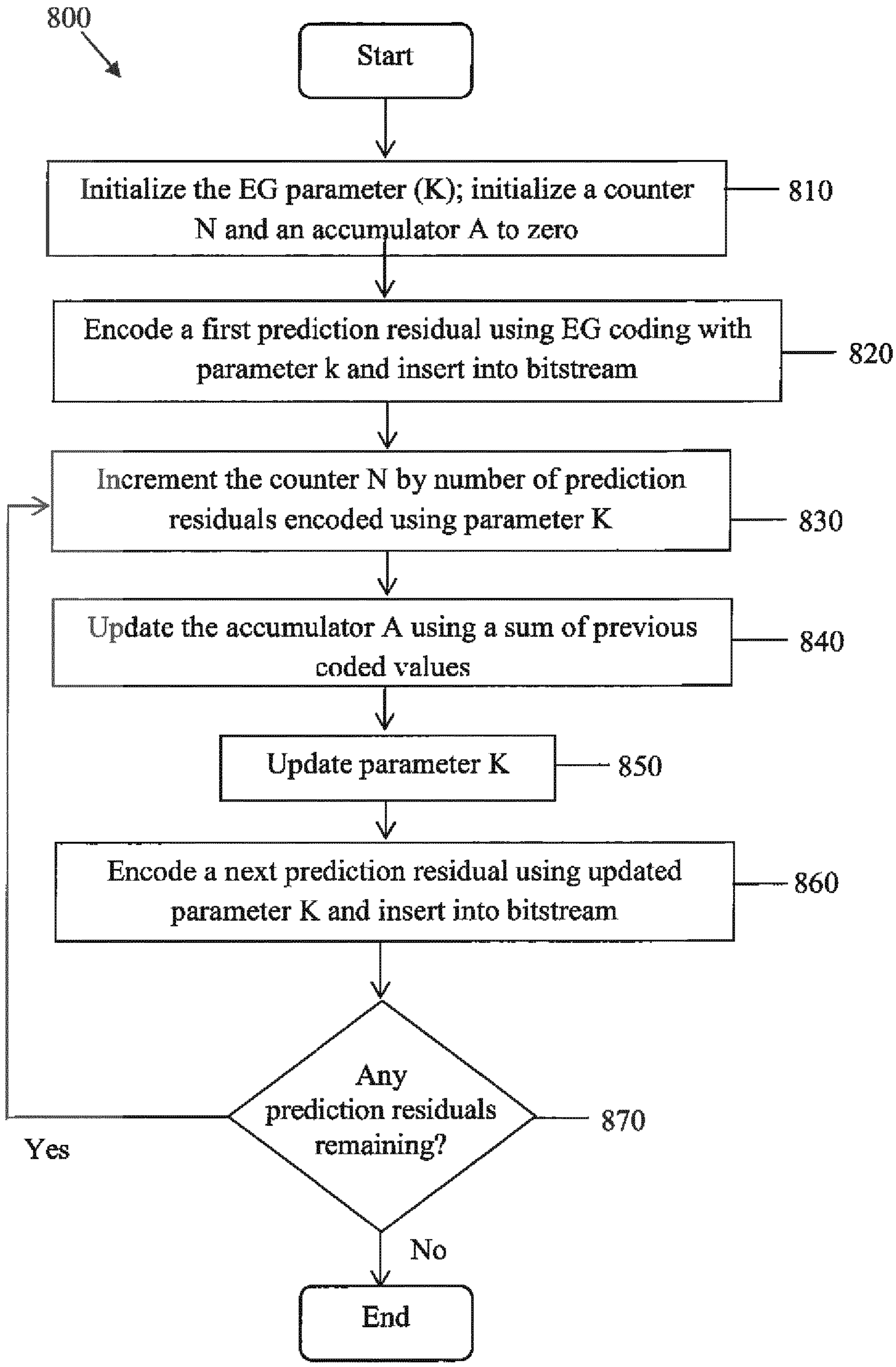
800
Start
Initialize the EG parameter (K); initialize a counter N and an accumulator A to zero
810
Encode a first prediction residual using EG coding with parameter k and insert into bitstream
820
Increment the counter N by number of prediction residuals encoded using parameter K
830
Update the accumulator A using a sum of previous coded values
840
Update parameter K
850
Encode a next prediction residual using updated parameter K and insert into bitstream
860
Any prediction residuals remaining?
870
Yes
No
End

*FIG. 14*

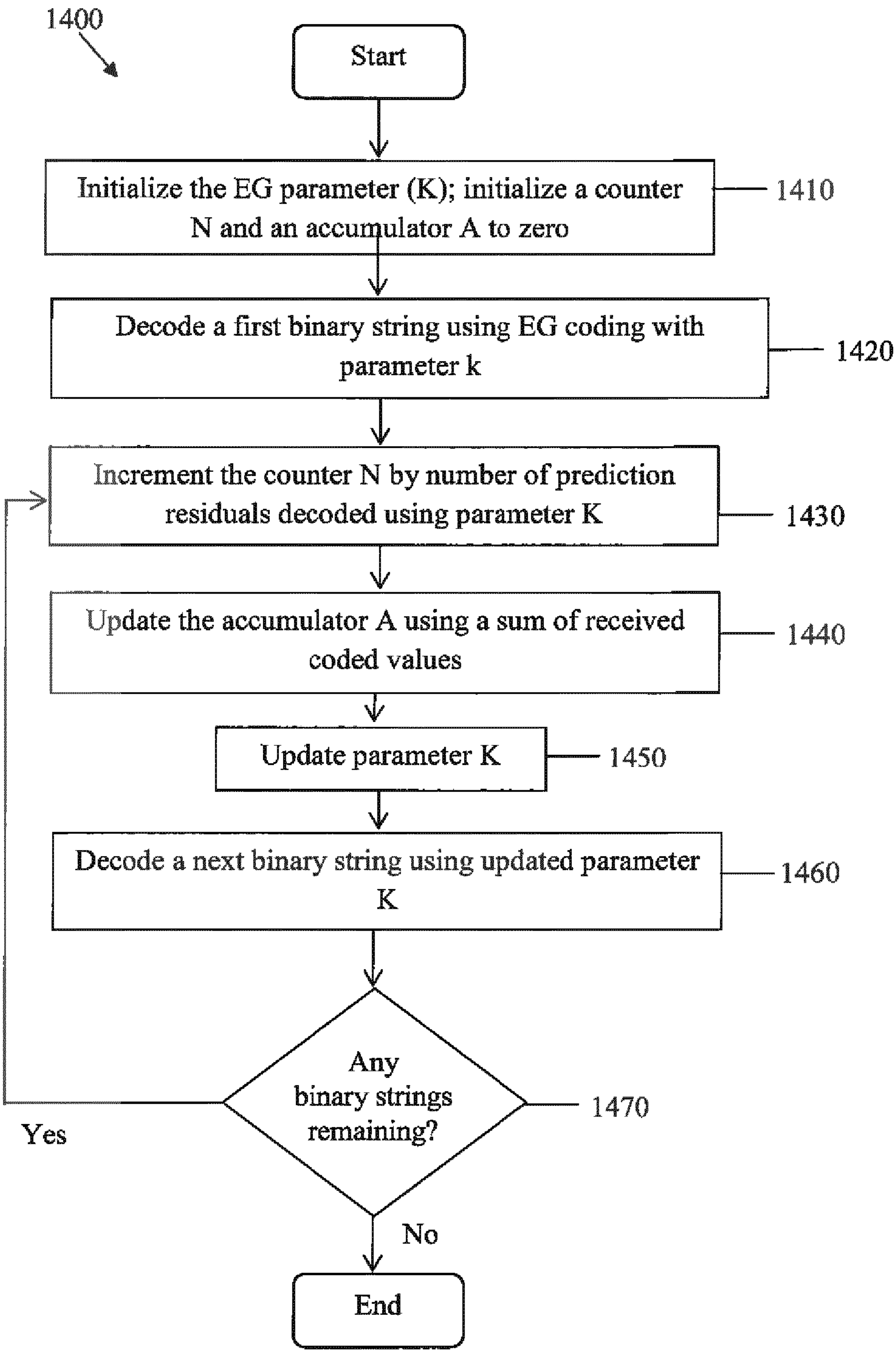
1400
Start
Initialize the EG parameter (K); initialize a counter N and an accumulator A to zero
1410
Decode a first binary string using EG coding with parameter k
1420
Increment the counter N by number of prediction residuals decoded using parameter K
1430
Update the accumulator A using a sum of received coded values
1440
Update parameter K
1450
Decode a next binary string using updated parameter K
1460
Any binary strings remaining?
1470
Yes
No
End

FIG. 15

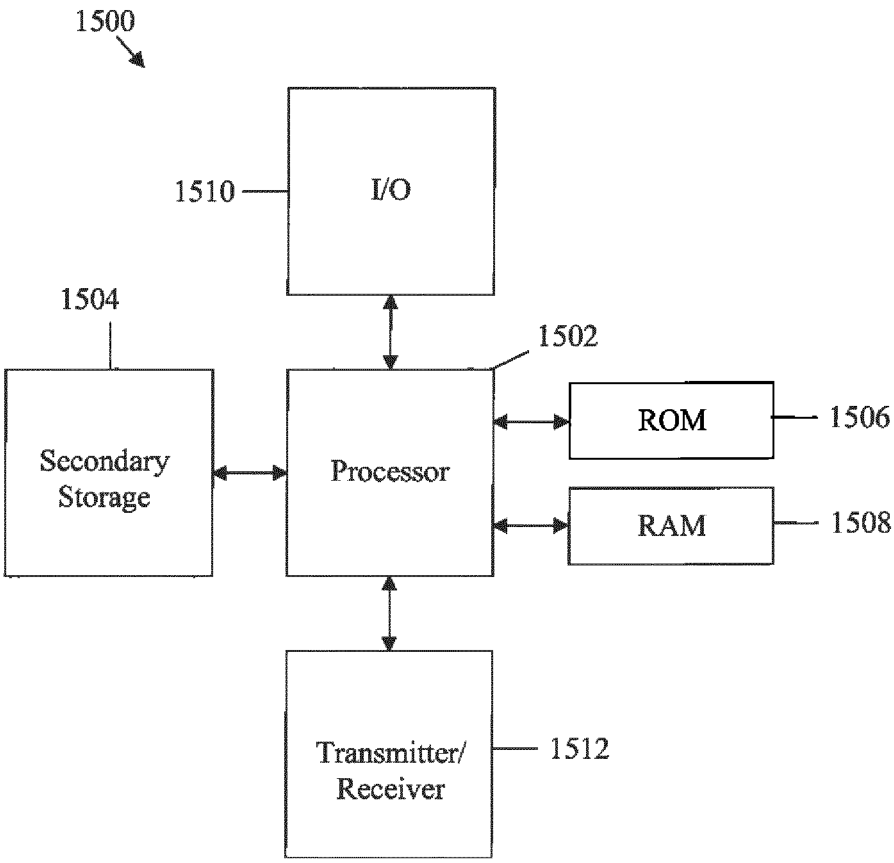
1500
1510
I/O
1504
1502
Secondary
Storage
Processor
ROM
1506
RAM
1508
Transmitter/
Receiver
1512

*FIG. 16*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- The LOCO-I Lossless Image Compression Algorithm: Principles and Standardization into JPEG-LS. **MARCELO J WEINBERGER et al.** IEEE TRANSACTIONS ON IMAGE PROCESSING. IEEE SERVICE CENTER, 01 August 2000, vol. 9
- LOCO-I: a low complexity, context-based, lossless image compression algorithm. **WEINBERGER M J et al.** DATA COMPRESSION CONFERENCE, 1996. DCC '96. PROCEEDINGS SNOWBIRD. IEEE COMPUT. SOC, 31 March 1996, 140-149
- **GAO et al.** AHG13: Improved Binarization Scheme for Intra Luma Prediction Residuals in Lossless Coding. *9. JCT-VC MEETING; 100. MPEG MEETING; 27-4-2012 - 7-5-2012; GENEVA; (JOINT COLLABORATIVE TEAM ON VIDEO CODING OF ISO/IEC JTC1/SC29/WG11 AND ITU-T SG.16),* 27 April 2012
- **B. BROSS et al.** High Efficiency Video Coding (HEVC) text specification draft 6. *JCTVC-H1003,* February 2012